(19) Europäisches Patentamt / European Patent Office / Office européen des brevets

(11) **EP 3 439 874 B1**

(12) **EUROPEAN PATENT SPECIFICATION**

(45) Date of publication and mention of the grant of the patent:
**22.06.2022 Bulletin 2022/25**

(21) Application number: **17716166.8**

(22) Date of filing: **04.04.2017**

(51) International Patent Classification (IPC):
**B32B 27/00** *(2006.01)* **B32B 27/08** *(2006.01)*
**B65D 65/40** *(2006.01)*

(52) Cooperative Patent Classification (CPC):
**B32B 27/00; B32B 27/08;** B32B 2439/70

(86) International application number:
**PCT/EP2017/058030**

(87) International publication number:
**WO 2017/174605 (12.10.2017 Gazette 2017/41)**

(54) **THERMOPLASTIC FILM FOR VACUUM SKIN PACKAGING, METHOD OF PACKAGING AND USES THEREOF**

THERMOPLASTISCHER FILM FÜR VAKUUM-SKIN-VERPACKUNG, VERFAHREN ZUR VERPACKUNG UND VERWENDUNGEN DAVON

FILM THERMOPLASTIQUE POUR PELLIPLACAGE SOUS VIDE, PROCÉDÉ D'EMBALLAGE ET LEURS UTILISATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.04.2016 EP 16163740**

(43) Date of publication of application:
**13.02.2019 Bulletin 2019/07**

(73) Proprietor: **Cryovac, LLC**
**Charlotte, NC 28208 (US)**

(72) Inventors:
- **FANFANI, Andrea Federico**
  **20151 Milano (IT)**
- **RICCIO, Marina**
  **20152 Milano (IT)**

(74) Representative: **PGA S.p.A.**
**Via Mascheroni, 31**
**20145 Milano (IT)**

(56) References cited:
**WO-A2-02/43957    US-A1- 2006 210 742**

**Description**

FIELD OF THE INVENTION

The presently disclosed subject matter relates generally to packaging films, more specifically to packaging films useful in vacuum skin packaging applications, method of making films, vacuum skin packages, method of making vacuum skin packages and using the same in vacuum skin packaging applications.

BACKGROUND

Vacuum skin packaging (VSP) is a process well known in the art using a thermoplastic packaging material to enclose a food product. The vacuum skin packaging process is in one sense a type of thermoforming process in which an article to be packaged serves as the mold for a forming web.

An article may be placed on a rigid, semi-rigid or flexible bottom support, that can be flat or shaped, e.g., tray-shaped, bowl-shaped or cup-shaped (also called "bottom" or "lower" web), and the supported article is then passed to a chamber where a "top" or "upper" web is first drawn upward against a heated dome and then draped down over the article. The movement of the top web is controlled by vacuum and/or air pressure, and in a vacuum skin packaging arrangement, the interior of the container is vacuumized before final welding of the top web to the bottom film. The distinguishing feature of a vacuum skin package is that the top heated film forms a tight skin around the article and is sealed to the part of the bottom support not covered by the article while in the thermoforming process, the top thermoplastic film is only sealed to the flange-like edges or rim of the bottom support using heated sealing bars or similar equipment.

Vacuum skin packages safely secure the article between the top web and the bottom support and can be opened by various methods.

One less desirable method requires the use of scissors, knives, or other cutting device.

Another method allows for manual opening by pulling apart the two parts, i.e. top and bottom, normally starting from a point like a corner of the package where the top web has purposely not been sealed to the bottom support. Packages that can be opened in this way are called "easy-to-open" or "EZO" packages.

An example of an easy-to-open (EZO) packaging mechanism can be based on the different chemical nature of the top and bottom film. The films of the top and bottom films are only partially compatible and consequently the seal fails when a transversal force is applied to the package at opening.

Vacuum skin packaging has become an increasingly attractive way of packaging several kinds of food, in particular fresh red meats. The final package presents a tight fitting, clear package, which protects the food article form the external environment.

However, the demands imposed on the packaging material used in vacuum skin packaging are particularly high, especially during the heating phase in the dome and the subsequent draping over the article.

Films suitable for VSP applications, for examples, have to stand the heating and stretching conditions within the vacuum chamber of the packaging machine without undergoing excessive softening and perforations. Heating the top web at too high temperatures can cause deformation of the bottom support once the top web is draped down onto the bottom support. In particular, in case of flanged rigid or semi-rigid bottom supports, the flange may result bent up after the packaging cycle, thus resulting in an unpleasant package.

Deformation of the bottom support is more and more frequent due to cost saving strategies that reduce gauge and thermal resistance of bottom supports.

It would then be convenient to heat the top web at temperatures lower than the typical temperatures conventionally used, not only to avoid deformation but also for energy savings.

Films used in other packaging applications, for instance packaging in bags or pouches or in tray lidding, may be not suitable for VSP applications, as they are not required to have the very high formability and thermal resistance that VSP films must have. Typically, films for bags, pouches or tray lidding are minimally or not formed under use.

Even more, films for bags, pouches or tray lidding are typically sealed with a hot sealing bar, which makes the seal stronger just for the direct mechanical pressure applied on the seal. On the contrary, films for VSP are generally required to form strong seals over much larger surfaces under milder conditions, namely under the action of temperature and differential air pressure alone, without application of any further mechanical pressure.

In other words, sealing performance of a VSP film - just for the peculiar draping and sealing all over the surface of the support not covered by the product under suction - is peculiar and more demanding than in other applications.

Additives for the top web are often used to aid in film processing, in particular slip agents that are known to act as lubricants.

Slip agents in fact reduce the resistance, known as film surface drag, which the films encounter when pulled across machine parts. This resistance, which is expressed as coefficient of friction (COF), is harmful to high speed film processing.

However, the addition of slip agents into thermoplastic films should be careful as slip agents may adversely affect both the interfacial bond and the strength of the heat seal. Furthermore, addition of too high amounts of slip agents - e.g. above a level of 750 ppm of erucamide - in the sealant layer was in general discouraged as the film may become too slippery to efficiently process.

Generally, in order to achieve the desired slip effects and to avoid weakening of the seal strength, seal layers of prior art vacuum skin packaging films include slip agents in amount lower than 0.1% by weight with respect to the seal layer weight. US2006/210742A1 (Cryovac) does not relate to VSP films but to retortable films for pouches manufactured by using vertical form-fill-seal machines.

WO02/43957A2 (Cryovac) does not relate to VSP films but to oriented, heat shrinkable films used for manufacturing bags and pouches for packaging liquid exuding products. This document faces the problem of sealing through contamination, which may result in weak seals and consequently package leaks. In order to improve sealability through contaminants, this document suggests the incorporation of high amount of slip agents in the seal layer of said films that would reduce the chemical affinity between the sealing resins and the contaminants and would allow the contaminant to be more easily squashed out or eliminated from the seal area. In both these documents, films are sealed with hot seal bars under the combined action of high temperatures and direct pressures on the seal areas.

SUMMARY OF THE INVENTION

The presently disclosed matter is an improvement on the above mentioned vacuum skin packaging by offering the addition of a slip agent at high loading to films used in the top film of vacuum skin packaging to reduce the sealing temperature needed to seal the package. The film and subsequent vacuum skin packaging using the film provide for a package that requires lower heating for sealing the package, which results in energy saving, and prevents the deformation of the bottom support, even with thin bottom supports. Surprisingly, the addition of anti-slip agent to the sealant layer at high loading (e.g. 3500 ppm), discouraged by the prior art, resulted in a decreased sealing temperature of the film without negatively affecting the processing (no excessive slippery) and the seal bond strength.

A first presently disclosed subject matter is thus directed to a vacuum skin packaging non-oriented thermoplastic film suitable for use as a top film, said film comprising at least

- an outer sealant layer a), comprising one or more sealable polymer(s) and one or more slip agent(s);
- a second layer a') adhered thereto, optionally comprising one or more sealable polymer(s) and one or more slip agent(s),

wherein the total content of slip agent(s), in the outer sealant layer a) or in the outer sealant layer a) and in the second layer a') adhered thereto, is greater than 0.10% by weight with respect to layer a) weight or to layer a) and second layer a') total weight respectively,

- an outer abuse layer b); and
- at least one inner bulk layer c) comprising one or more polymers selected from low density polyethylene, ethylene-vinyl acetate copolymers, linear low density polyethylenes, linear very low density polyethylenes and ionomers,

wherein the total thickness of the bulk layer(s) c) in the overall structure is at least 30%.

A second presently disclosed subject matter is directed to a method of making a non-oriented thermoplastic vacuum skin packaging film suitable for use as a top film, said method comprising

i) blending one or more sealable polymer(s) with one or more slip agent(s) to form an outer sealant layer a),
ii) optionally, blending one or more sealable polymer(s) with one or more slip agent(s) to form a second layer a') to be adhered to the outer sealant layer a),

wherein the outer sealant layer a) or
the outer sealant layer a) together with the second layer a') adhered thereto, comprise greater than 0.10% by weight of slip agent(s);

iii) coextruding the outer sealant layer a), the second layer a') adhered thereto, the outer abuse layer b), an inner bulk layer c) and, optionally, one or more of an inner tie layer d) and an inner barrier layer e) and
iv) optionally, cross-linking the film,

thus providing the thermoplastic vacuum skin packaging film suitable for use as a top film.

A third presently disclosed subject matter is directed to a vacuum skin package, comprising

- a bottom support comprising a first outer sealant layer,
- an article loaded on top of the bottom support, and
- a top non-oriented thermoplastic film, according to the first disclosed subject matter, the film comprising a second outer sealant layer a),

the top film substantially conforming with both an upper surface of the article and a portion of the bottom support not covered by the article,

wherein the top film second outer sealant layer a) is sealed to the first outer sealant layer of the bottom support in the portion not covered by the article.

A fourth presently disclosed subject matter is directed to a method of manufacturing a vacuum skin package. The method includes providing a bottom support including a first outer sealant layer. The bottom support has preferably a thickness less than 800 microns. The method further includes placing an article on top of the bottom support. The method further includes providing a top non-oriented thermoplastic film over the bottom support having the article thereon, such top thermoplastic film being a film according to the first disclosed subject matter, and comprising a second outer sealant layer a). The second outer sealant layer a) of the top film faces the bottom support.

The method includes heating the top non-oriented thermoplastic film to a softening point to produce a softened, conformable top thermoplastic film. The method further includes evacuating the atmosphere from a region between the bottom support and the top thermoplastic film. The method even further includes draping the softened, conformable non-oriented top thermoplastic film over both an upper surface of the article and a portion of an upper surface of the bottom support not covered by the article. The method also includes sealing the first outer sealant layer to the second outer sealant layer a) in a region in which the first outer and second outer sealant layers come into direct contact with one another, by differential air pressure, without the bottom support undergoing substantial distortion as a result of the sealing of the first outer sealant layer of the bottom support to the second outer sealant layer a) of the top film. In particular, the method for manufacturing a vacuum skin package comprises the steps of:

a. providing a bottom support including a first outer sealant layer;
b. placing an article on top of the bottom support;
c. providing a non-oriented top thermoplastic film including a second sealant layer a) according to the present invention - over the bottom support having the article thereon, wherein the second sealant layer a) of the top film faces the bottom support;
d. heating the top thermoplastic film to a softening point to produce a softened, conformable top thermoplastic film;
e. evacuating the atmosphere from a region between the bottom support and the top thermoplastic film;
f. draping the softened, conformable top thermoplastic film over both an upper surface of the article and a portion of an upper surface of the bottom support not covered by the article; and
g. sealing the first outer sealant layer to the second outer sealant layer a) in a region in which the first outer and second outer sealant layers come into direct contact with one another, by differential air pressure.

A fifth presently disclosed subject matter is directed to the use of the non-oriented thermoplastic film of the invention as a top thermoplastic film for vacuum skin packaging applications.

FIGURES

Figure 1A and 1B illustrate possible sealing defects of VSP products and outline the score in a formability test.
Figure 2 illustrates possible sealing defect for circular bridging in VSP products.
Figure 3 is a top view of the block used in the present implosion resistance test. The drawing is on scale, namely the proportion of the parts are kept, and the measures of the holes reported therein are the real dimensions in mm.
Figure 4 (not to scale drawing) illustrates the preparation of the specimens for the measurement of the seal strength of the films of the invention and of comparative films as described in the present experimental section.

DETAILED DESCRIPTION

The presently disclosed subject matter is directed to a thermoplastic film wherein at least the outer sealant layer comprises a slip agent added at high loading and to vacuum skin packages that use the thermoplastic film as the top film.

Definitions

While the following terms are believed to be well understood by one of ordinary skill in the art, the following definitions are set forth to facilitate explanation of the presently disclosed subject matter.

Unless defined otherwise, all technical and scientific terms used herein have the same meaning as commonly understood to one of ordinary skill in the art to which the presently disclosed subject matter belongs.

Following long standing patent law convention, the terms "a", "an", and "the" refer to "one or more" when used in the subject application, including the claims. Thus, for example, reference to "a composition" includes a plurality of such compositions, and so forth.

Unless indicated otherwise, all numbers expressing quantities of components, reaction conditions, and so forth used in the specification and claims are to be understood as being modified in all instances by the term "about". Accordingly, unless indicated to the contrary, the numerical parameters set forth in the instant specification and attached claims are approximations that can vary depending upon the desired properties sought to be obtained by the presently disclosed subject matter.

As used herein, the term "about", when referring to a value or to an amount of mass, weight, time, volume, concentration, percentage, and the like can encompass variations of, and in some embodiments, $\pm20\%$, in some embodiments $\pm10\%$, in some embodiments $\pm5\%$, in some embodiments $\pm1\%$, in some embodiments $\pm0.5\%$, and in some embodiments $\pm0.1\%$, from the specified amount, as such variations are appropriated in the disclosed package and methods.

As used herein, the term "composition" refers to any solution, compound, formulation or mixture with at least two ingredients. The ingredients may be, for example, chemicals, substances, molecules, or compositions.

As used herein, the term "film" is used in a generic sense to include plastic web, regardless of whether it is a film or sheet. Films of and used in the present invention may have a thickness of up to 2000 microns or more.

As used herein, the phrase "a vacuum skin packaging thermoplastic film suitable for use as a top film" and the like refer to a thermoplastic film which is suitable for use in a VSP process, namely a film able to stand heating and stretching conditions within the vacuum chamber of the packaging machine without undergoing perforations and excessive softening and, afterwards, able to tightly adhere to the surface of the support. Preferably, a film for use as a top film in VSP packaging is characterized by high implosion resistance, formability and sealability as defined and evaluated according to the present description.

As used herein, the term "non-oriented" refers to films that had not been subjected to any orientation process, also known as "cast films".

As used herein the term "orientation process" relates to stretching the coextruded tape or tube in at least one or in two perpendicular directions, typically the longitudinal or machine direction (MD) and the transverse or crosswise direction (TD), at a temperature higher than the highest Tg of the resins making up the film layers and lower than the highest melting point of at least one polymer of the film layers, namely at a temperature where the resins, or at least some of the resins, are not in the molten state.

As used herein, the term "non-oriented, non heat-shrinkable" film refers to a film which had not been oriented by stretching under temperature conditions, as indicated above. Upon subsequent reheating, the non-oriented, non heat-shrinkable film will not or will minimally shrink in seeking to recover its original dimensional state as an oriented, heat-shrinkable film does.

As used herein, the term "non heat-shrinkable" refers to a film having a free shrink percentage (at 160°C in oil) in both the machine and transverse directions of less than 15%, preferably less than 10% or less than 5%. The terms "vacuum skin packaging" or "VSP" as used herein indicate a packaging process in which the article is packaged under vacuum and the space containing the article is evacuated from gases at packaging. The top flexible film is also referred to as "skin-forming" or "skin" film.

As used herein, the term "package" refers to packaging materials used in the packaging of an article.

As used herein, the term "homopolymer" refers to a polymer resulting from the polymerization of a single monomer, i.e., a polymer consisting essentially of a single type of repeating unit.

As used herein, the term "copolymer" refers to polymers formed by the polymerization reaction of at least two different monomers. The term copolymer also includes terpolymers.

As used herein, the term "sealable polymer" relates to thermoplastic polymers generally used as components of outer sealant layers of VSP films for their sealability under VSP conditions.

In particular, sealable polymers are characterized by a melting point lower than 180°C, preferably lower than 160°C, more preferably lower than 140°C, particularly preferably lower than 120°C. Preferably, the melting point is higher than 60°C.

In case of amorphous polymer(s), sealable polymers are characterized by a glass transition temperature (Tg) lower than 120°C, preferably lower than 100°C, more preferably lower than 80°C. Tg and Tm can be measured according to ASTM D 3418 using a Differential Scanning Calorimeter.

Preferred sealable polymers are polyolefins as herein below defined.

As used herein, the term "polyolefin" refers to any polymerized olefin, which can be linear, branched, cyclic, aliphatic, aromatic, substituted or unsubstituted. More specifically, included in the term "polyolefin" are homopolymers of olefin, copolymers of olefins, copolymers of an olefin and a non-olefinic comonomer copolymerizable with the olefin, such as vinyl monomers, modified polymers thereof, and the like. Specific examples include polyethylene homopolymer, polypropylene homopolymer, polybutene, ethylene/alpha-olefin copolymer, propylene/alpha-olefin copolymer, butene/alpha-olefin copolymer, ethylene-vinyl acetate copolymer (EVA), ethylene unsaturated ester copolymer and ethylene unsaturated acid copolymer [especially ethylene/butyl acrylate copolymer, ethylene/methyl acrylate, ethylene-acrylic acid copolymer (EAA), ethylene/methacrylic acid copolymer (EMAA)], modified polyolefin resins, ionomer resins, polymethylpentene, etc.

The term "ethylene copolymer" is used herein to refer to ethylene/alpha-olefin copolymers. Ethylene/alpha-olefin copolymers generally include copolymers of ethylene and one or more comonomers selected from alpha-olefins having from 4 to 12 carbon atoms, such as 1-butene, 1-pentene, 1-hexene, 1-octene, 4-methyl-1-pentene and the like. "Ethylene-alpha-olefin copolymer" and "ethylene/alpha olefin copolymer", refer to such heterogeneous materials as linear low density polyethylene (LLDPE), and very low and ultra low density polyethylene (VLDPE and ULDPE); and homogeneous polymers such as metallocene-catalyzed EXACT™ linear homogeneous ethylene/alpha olefin copolymers resins obtainable from Exxon Chemical Company and TAFMER™ linear homogeneous ethylene-alpha olefin copolymer resins obtainable from Mitsui Petrochemical Corporation. All these materials generally include copolymers of ethylene with one or more comonomers selected from $C_4$ to $C_{10}$ alpha-olefins such as butene-1 (i.e., 1-butene), hexene-1, octene-1, etc. in which the molecules of the copolymers comprise long chains with relatively few side chain branches or cross-linked structure. This molecular structure is to be contrasted with conventional low or medium density polyethylenes, which are more highly branched than their respective counterparts. Ethylene/alpha-olefin copolymers generally have a density in the range of from about 0.86 g/cm$^3$ to about 0.94 g/cm$^3$. The term linear low density polyethylene (LLDPE) is generally understood to include that group of ethylene/alpha-olefin copolymers which fall into the density range of about 0.915 g/cm$^3$ to about 0.94 g/cm$^3$ and particularly about 0.915 g/cm$^3$ to about 0.925 g/cm$^3$. Sometimes linear polyethylene in the density range from about 0.926 g/cm$^3$ to about 0.94 g/cm$^3$ is referred to as linear medium density polyethylene (LMDPE). Lower density ethylene/alpha-olefin copolymers may be referred to as very low density polyethylene (VLDPE) and ultra-low density polyethylene (ULDPE). Ethylene/alpha-olefin copolymers may be obtained by either heterogeneous or homogeneous polymerization processes. Other ethylene/alpha olefin copolymers such as the long chain branched homogeneous ethylene/alpha olefin copolymers available from the Dow Chemical Company, known as AFFINITY™ resins, are also included as another type of homogeneous ethylene-alpha olefin copolymer.

As used herein, the term "ionomer" (Io) refers to the ionized or partially ionized form of a copolymer of ethylene with a copolymerisable ethylenically unsaturated carboxylic acid monomer selected from acrylic acid and methacrylic acid wherein the neutralizing cation can be any suitable metal ion, e.g. an alkali metal ion, a zinc ion, or other multivalent metal ions.

As used herein, the term "polyamides" includes aliphatic homo- or co-polyamides commonly referred to as e.g. polyamide 6, polyamide 69, polyamide 610, polyamide 612, polyamide 11, polyamide 12, polyamide 6/12, polyamide 6/66, polyamide 66/610, modifications thereof and blends thereof. Said term also includes crystalline or partially crystalline, aromatic or partially aromatic, polyamides, such as polyamide 6I/6T or polyamide MXD6.

As used herein, the term "polyesters" refers to polymers obtained by the polycondensation reaction of dicarboxylic acids with dihydroxy alcohols. Suitable dicarboxylic acids are, for instance, terephthalic acid, isophthalic acid, 2,6-naphthalene dicarboxylic acid and the like. Suitable dihydroxy alcohols are for instance ethylene glycol, diethylene glycol, 1,4-butanediol, 1,4-cyclohexanedimethanol and the like. Examples of useful polyesters include poly(ethylene 2,6-naphtalate), poly(ethylene terephthalate), and copolyesters obtained by reacting one or more dicarboxylic acids with one or more dihydroxy alcohols, such as PETG which is an amorphous co-polyesters of terephthalic acid with ethylene glycol and 1,4-cyclohexanedimethanol.

As used herein, the phrase "directly adhered" or "directly adhering", as applied to film layers, is defined as adhesion of the subject film layer to the object film layer, without a tie layer, adhesive, or other layer there between.

As used herein "contiguous", when referred to two layers, is intended to refer to two layers that are directly adhered one to the other. In contrast, as used herein, the word "between", as applied to a film layer expressed as being between two other specified layers, includes both direct adherence of the subject layer to the two other layers it is between, as well as lack of direct adherence to either or both of the two other layers the subject layer is between, i.e., one or more additional layers can be imposed between the subject layer and one or more of the layers the subject layer is between.

As used herein, the term "extrusion" is used with reference to the process of forming continuous shapes by forcing a molten plastic material through a die, followed by cooling. Immediately prior to extrusion through the die, the relatively high viscosity polymeric material is fed into a rotating screw of variable pitch, i.e., an extruder, which forces the polymeric material through the die.

As used herein, the term "coextrusion" refers to the process of extruding two or more materials through a single die with two or more orifices arranged so that the extrudates merge and weld together into a laminar structure before chilling, i.e. quenching.

As used herein, the phrase "outer layer" or "skin layer" refer to any film layer having only one of its principal surfaces directly adhered to another layer of the film.

As used herein, the phrase "inner layer" refers to any layer having both its surfaces directly adhered to another layer of the film.

As used herein, the terms "core", and "core layer" refer to any inner layer, which has a primary function other than serving as an adhesive or compatibilizer for adhering two layers to one another.

As used herein, the phrase "tie layer" refers to any inner layer having the primary purpose of adhering two layers to one another.

As used herein, the phrase "bulk layer" refers to any inner layer having the primary purpose to improve the mechanical properties. For example, a bulk layer improves the abuse or puncture resistance of the film or just to provide the desired thickness. As used herein, the phrases "seal layer", "sealing layer", "heat-seal layer", and "sealant layer", refer to an outer layer of a film or of a bottom support involved in a sealing step in the manufacture of a vacuum skin package.

As used herein the term "barrier layer" refers to a gas barrier layer or, preferably, to an oxygen-barrier layer, and it is used to identify layers or structures characterized by an Oxygen Transmission Rate (evaluated at 23°C and 0 % R.H. according to ASTM D-3985 and measured through using an OX-TRAN instrument by Mocon) of less than 500 $cm^3/m^2$/day atm. Suitable thermoplastic materials that would provide such gas-barrier properties are PVDC, polyamides, EVOH, polyesters, and blends thereof, preferably EVOH.

As used herein, PVDC is any vinylidene chloride copolymer wherein a major amount of the copolymer comprises vinylidene chloride and a minor amount of the copolymer comprises one or more unsaturated monomers copolymerisable therewith, typically vinyl chloride, and alkyl acrylates or methacrylates (e.g. methyl acrylate or methacrylate) and the blends thereof in different proportions. Generally, a PVDC barrier layer will contain plasticisers and/or stabilizers as known in the art. As used herein, EVOH is the saponified product of ethylene-vinyl ester copolymers, generally of ethylene-vinyl acetate copolymers, wherein the ethylene content is typically comprised between 20 and 60 % by mole and the degree of saponification is generally higher than 85 % preferably higher than 95 %.

As used herein, the term "thermoplastic starch" or "TPS" means a native starch or a starch derivative that has been rendered destructured and thermoplastic by treatment with one or more plasticizers, with at least one plasticizer still remaining. Thermoplastic starch compositions are well known and disclosed in several patents, for example: US. Pat. Nos. 5,280,055; 5,314,934; 5,362,777; 5,844,023; 6,214,907; 6,242,102; 6,096,809; 6,218,321; 6,235,815; 6,235,816; and 6,231,970.

As used herein the term "bottom support" means the bottom part of the VSP package onto which the article is accommodated and onto which the top film is sealed for the part that is not covered by the article. The bottom support can be flat or shaped, i.e. tray-shaped, rigid, semi-rigid or flexible. The bottom support may be a bottom in-line thermoformed or an off-line pre-made tray, optionally perforated. As used herein, the term "seal" refers to any seal of a first region of a bottom support surface to a second region of a top film surface, wherein the seal is formed by heating the regions to at least their respective seal initiation temperatures. The heating can be provided by anyone or more of a wide variety of manners, such as using a heated bar, hot air, infrared radiation, heated dome, etc. For example, heating during a VSP process is generally performed on the top film only, and is commonly done by contacting the top film with a heated dome. The top film is fully heated while held by suction in contact with the heated ceiling and walls of the dome, while typically the bottom support is only heated indirectly, by the heated top film when draped onto it.

As used herein, the term "sealing temperature" refers to the temperature of the dome of the VSP equipment, onto which the top film is applied by suction and by which it is heated during VSP cycle.

As used herein the terms "easy-to-open" or "EZO" or "easy opening" blend or layer relate to a polymer blend or a layer comprising said polymer blend which easily fail when contrary forces are applied to.

As used herein, the term "easy opening package" means a package showing an opening force, measured by using the method described herein, of from 150 to 900 g/2.54 cm, preferably 250 to 800 g/2.54 cm, even more preferably 300 to 700 g/2.54 cm.

As used herein, the phrase "cohesive failure" refers to any system where the easy opening feature is achieved by internal rupture of a layer, which during opening of the package breaks along a plane parallel to the layer itself.

As used herein, the terms "cohesive failure blend" or "frangible blend" relate to a blend of polymers having a different chemical nature. The polymers are only partially compatible and consequently the material fails when a transversal force is applied to.

As used herein, the phrases "opening strength" or "opening force" refer to the force required to open the package measured according to the method described in the experimental section of the present description.

As used herein, the phrase "differential air pressure" refers to the difference in pressure between the atmospheric pressure outside and the vacuum inside the package.

As used herein, the term "gel content" refers to the content of gel material within a polymeric material. The gel content is related to the extent of cross-linking within a polymeric material. The gel content is expressed as a relative percent (by weight) of the polymer having formed insoluble carbon-carbon bonds between polymers and may be determined by the method described in the experimental part. All compositional percentages used herein are presented on a "by weight" basis, unless designated otherwise.

As used herein the abbreviation "mic." refers to microns.

Although the majority of the above definitions are substantially as understood by those of skill in the art, one or more of the above definitions can be defined hereinabove in a manner differing from the meaning as ordinarily understood by those of skill in the art, due to the particular description herein of the presently disclosed subject matter.

The Disclosed Thermoplastic Film

The presently disclosed vacuum skin packaging non-oriented thermoplastic film suitable for use as a top film comprises at least

- an outer sealant layer a), comprising one or more sealable polymer(s) and one or more slip agent(s);
- a second layer a') adhered thereto, optionally comprising one or more sealable polymer(s) and one or more slip agent(s),

wherein the total content of slip agent(s), in the outer sealant layer a) or in the outer sealant layer a) and in the second layer a') adhered thereto, is greater than 0.10% by weight with respect to layer a) weight or to layer a) and second layer a') total weight respectively;

- an outer abuse layer b); and
- at least one inner bulk layer c) comprising one or more polymers selected from low density polyethylene, ethylene-vinyl acetate copolymers, linear low density polyethylenes, linear very low density polyethylenes and ionomers,

wherein the total thickness of the bulk layer(s) c) in the overall structure is at least 30%. The outer sealant layer a) of the present films comprises at least "a sealable polymer", namely a polymer generally used for sealing purpose in the art of VSP films, typically at least a polyolefin characterized by low Tg and/or Tm values.

Suitable sealable polymers for the heat-sealable layer may be ethylene homo- or co-polymers, like LDPE, ethylene/alpha-olefin copolymers, ethylene/acrylic acid copolymers, ethylene/methacrylic acid copolymers, ethylene/vinyl acetate copolymers or ionomers.

Preferred materials for the heat-sealable layer are LDPE, ethylene/alpha-olefin copolymers, ionomers, ethylene-vinyl acetate copolymers and blends thereof, more preferred ionomers, LDPE, ethylene/alpha-olefin copolymers, most preferred ionomers and LLDPE.

The sealant layer may comprise a polyolefin.

The sealant layer may comprise 80% to lower than 100%, preferably 80 to 99.9% by weight of a polyolefin. In some embodiments, the sealant layer may comprise 90% to 95% of a polyolefin. In further embodiments, the sealant layer may comprise 93% of a polyolefin.

The polyolefin, may have a density of less than about 0.94 g/cm$^3$. The polyolefin may be a low-density polyethylene with a density of 0.91 g/cm$^3$ to 0.925 g/cm$^3$. The polyolefin may be a linear low-density polyethylene with a density of 0.900 g/cm$^3$ to 0.94 g/cm$^3$. In some embodiments, the sealant layer may have 93% by weight of a linear low-density polyethylene.

Examples of suitable resins for the outer layer a) are ethylene-propylene copolymer VERSIFY 3000 (DOW), ethylene-vinyl acetate copolymer ESCORENE ULTRA FL00909 (Exxon Mobil), low-density polyethylene such as LD259 or LD158BW (Exxon Mobil), very low-density polyethylene QUEO 2M131 Borealis, linear low-density polyethylene (LLDPE) as Exceed 4518PA by Exxon Mobil or ionomer Surlyn 1702 (DuPont).

Preferably, layer a) comprises at least 50%, 60%, 70%, 80%, 90%, 95%, 99% or 99.9% by weight with respect to the layer a) weight of one or more of the above sealable polymers.

The outer sealant layer comprises at least a slip agent.

Slip agents preferably included in the outer sealant layer a) of the film of the present invention are, for example, non-ionic surfactants and other well-known lubricating agents.

In particular, the slip agent may be selected from amides, carboxylic acids and their admixtures.

Amides which are preferred are the amides of carboxylic acids having at least five carbon atoms, such as behenamide, linolenamide, arachidamide, ricinolamide, palmitamide, myristamide, linoleamide, lauramide, capramide, perlargonamide, caprylamide, oleamide, stearamide, N,N'-ethylene bisoleamide, and the most preferred slip agent, erucamide and the like, and their admixtures.

Preferably, the slip agent is a fatty acid amide, more preferably an unsaturated fatty acid amide. The fatty acid amide may be selected from erucamide, oleamide, stearamide and combinations thereof. The fatty acid amide may be erucamide. Most preferably, it is erucamide.

Suitable amides are commercially called amide waxes.

Carboxylic acids which are useful slip agents include those having at least four carbon atoms, for example, butyric, caproic, caprylic, capric, lauric, lauroleic, myristic, myristoleic, pentadecanoic, palmitic, palmitoleic, margaric, stearic, oleic, linoleic, linolenic, ricinoleic, 2,3-dihydroxystearic, 12-hydroxystearic, behenic, eleostearic, arachidic, 2-ecosenoic, 2,4-eicosadienoic, 2-docosenoic, 2-tetracosenoic, 2,4,6-tetracosatrienoic and the like.

The outer sealant layer a) and, optionally, the second layer a') adhered thereto may contain one or more of the above mentioned slip agent(s).

The total content of slip agent in the outer sealant layer a) or in the outer sealant layer a) and in the second layer a') adhered thereto, is preferably greater than 0.15%, 0.20%, 0.25%, 0.30%, 0.33% by weight with respect to layer a) weight or to layer a) and second layer a') total weight respectively.

The total content of slip agent in the outer sealant layer a) or in the outer sealant layer a) and in the second layer a') adhered thereto, is preferably lower than 1.5%, 1.0%, 0.9%, 0.8%, 0.7%, 0.6%, 0.5% by weight with respect to layer a) weight or to layer a) and second layer a') total weight respectively

The total content of slip agent, preferably erucamide, in the outer sealant layer a) or in the outer sealant layer a) and in the second layer a') adhered thereto may range from 0.10 % to 1.5 %, preferably from 0.15 to 1.0 %, more preferably from 0.15 to 0.8%, from 0.2 to 0.8% %, from 0.25 to 0.5% %, even more preferably from 0.3 to 0.4% by weight with respect to layer a) weight or to layer a) and second layer a') total weight respectively.

In further embodiments, the total content of slip agent in the outer sealant layer a) or in the outer sealant layer a) and in the second layer a') adhered thereto may be of 0.35 wt% of slip agent, preferably of erucamide.

In preferred embodiments, the slip agent is contained only in the outer sealant layer a) of the thermoplastic film of the present invention, more preferably the slip agent is not present in any other layer of the film.

In other embodiments, part of the slip agent is contained in the second layer a') adhered to the outer sealant layer a).

Preferably, the second layer a') comprises less than 70%, 60%, 50%, 40%, 30%, 20%, 10% or 5% of the total amount of slip agent, most preferably all the slip agent is contained in the outer seal layer a).

When the slip agent is also contained in the second layer a'), it may contribute to lowering the sealing initiation temperature of the outer seal layer a) by migrating into the outer seal layer a) or by preventing the slip agents back migration from the first outer seal layer a) to the same second layer a').

The outer sealant layer a) may have a thickness from 2 mic. to 20 mic. In some embodiments, the sealant layer may have a thickness of a range from 2 mic. to 15 mic., preferably from 2 mic. to 12 mic., more preferably from 5 mic. to 10 mic. In further embodiments, the outer sealant layer may have a thickness of 8 mic. The outer sealant layer may have a thickness of 10 mic.

The present film comprises at least a second layer a') adhered to the outer sealant layer a).

The second layer a') adhered to the outer sealant layer a) may be an inner bulk layer c), an inner tie layer d) or an inner barrier layer e) as described herein below. When comprising the slip agent, the second layer a') also comprises one or more sealable polymer(s) as defined for the outer sealant layer a) above. In such a case, the second layer a') may comprise the same or different sealable polymer(s) of the outer sealant layer a); preferably, the second layer a') has the same composition of the outer sealant layer a).

An outer abuse layer b) is the layer of the non-oriented film that will be in contact with the heated dome of the vacuum chamber in the VSP process.

The outer abuse layer b) comprises one or more polymer(s) selected from the group consisting of polyolefins and their copolymers, polyamides, polyesters and styrene-based polymers.

The outer abuse layer b) comprises one or more polymer(s) selected from the group consisting of polyolefins and their copolymers, polyamides, polyesters and styrene-based polymers in an amount of at least 50%wt of the total weight of layer b), even more preferably at least 65%, at least 80%, at least 90%.

In the preferred embodiment, the outer abuse layer b) consists of one or more polymer(s) selected from polyolefins and their copolymers, polyamides, polyesters and styrene-based polymers.

Polyolefin refers to any polymerized or co-polymerized olefin that can be linear, branched, or cyclic, substituted or unsubstituted, and possibly modified. Resins such as polyethylene, ethylene- alpha -(C4-C8)olefin copolymers, ethylene-propylene copolymers, ethylene-propylene- alpha - (C4-C8)olefin ter-polymers, propylene-butene copolymer, polybutene, poly(4-methyl-pentene-1), ethylene-propylene rubber, butyl rubber, as well as copolymers of ethylene (or a higher olefin) with a comonomer which is not an olefin and in which the ethylene (or higher olefin) monomer predominates such as ethylene-vinyl acetate copolymers, ethylene-acrylic acid copolymers, ethylene-alkyl acrylate copolymers, ethylene-methacrylic acid copolymers, ethylene-alkyl methacrylate copolymers, ethylene-alkyl acrylate-maleic anhydride copolymers, ionomers, as well the blends thereof in any proportions are all included. Also included are the modified polyolefins, where the term "modified" is intended to refer to the presence of polar groups in the polymer backbone. The above polyolefin resins can be "heterogeneous" or "homogeneous", wherein these terms refer to the catalysis conditions employed and as a consequence thereof to the particular distribution of the molecular weight, branched chains size and distribution along the polymer backbone, as known in the art.

The preferred resins for the outer abuse layer b) of the film according to the first object of the present invention are polyolefins as herein defined, particularly ethylene homo-and co-polymers, propylene homo- and co-polymers and ionomers, or polyamides or (co)polyesters, i.e. PET-G, or styrene-based polymer and their admixtures.

Layer b) preferably comprises ionomers, MDPE and HDPE, more preferably HDPE. Generally, suitable melting points are higher than 108°C, preferably higher than 120°C.

Exemplary HDPE resins for the outer abuse layer are RIGIDEX HD6070FA by Ineos, Surpass HPs667-AB by Nova Chemicals, antiblock HDPE grade 102804 by Ampacet.

Suitable MDPE is DOWLEX SC2108G by Dow.

Exemplary ionomers are Surlyn 1601 and Surlyn 1650 (DuPont).

Suitable polypropylene copolymer is grade RB307MO by Borealis.

The term "polyamides" includes aliphatic homo- or co-polyamides commonly referred to as e.g. polyamide 6, polyamide 69, polyamide 610, polyamide 612, polyamide 11, polyamide 12, polyamide 6/12, polyamide 6/66, polyamide 66/610, modifications thereof and blends thereof. Said term also includes crystalline or partially crystalline, aromatic or partially aromatic, polyamides, such as polyamide 6I/6T or polyamide MXD6.

Crystalline polyamides for the film of the present invention are those polyamides whose melting point is preferably within the range from about 130 to 230°C, more preferably from about 160 to 220°C, even more preferably from about 185 to 210°C. Suitable crystalline polyamides comprise crystalline homo-polyamides and co-(or ter-) polyamides, preferably selected among PA6; PA6.6; PA6.66; PA66.6; PA6.12; PA6.66.12; PA12; PA11; PA6.9; PA6.69; PA6.10; PA10.10; PA66.610; PA MXD6/MXDI, more preferably selected among PA6; PA6.66; PA66.6; PA6.12; PA6.66.12; PA12; PA11; PA6.9; PA MXD6/MXDI, even more preferably among PA6; PA6.66; PA6.12; PA6.66.12; PA12; PA11, most preferably being said crystalline polyamide PA6.66, and blends thereof.

Suitable polyamides are ULTRAMID C33 L 01 supplied by BASF (PA6/66), Terpalex (PA6/66/12) and Grilon CF6S supplied by EMS (PA 6/12).

The term "polyesters" for the outer abuse layer refers to polymers obtained by the polycondensation reaction of dicarboxylic acids with dihydroxy alcohols. Suitable dicarboxylic acids are, for instance, terephthalic acid, isophthalic acid, 2,6-naphthalene dicarboxylic acid and the like. Suitable dihydroxy alcohols are for instance ethylene glycol, diethylene glycol, 1,4-butanediol, 1,4-cyclohexanedimethanol and the like. Examples of useful polyesters include poly(ethylene 2,6-naphtalate), poly(ethylene terephthalate), and copolyesters obtained by reacting one or more dicarboxylic acids with one or more dihydroxy alcohols, such as PETG which is an amorphous co-polyesters of terephthalic acid with ethylene glycol and 1,4-cyclohexanedimethanol.

Suitable polyesters are Ramapet N180 and Ramapet N1 by Indorama or Artenius PET Global by Artenius or Eastar PETG 6763 by Eastman.

As used herein, the phrase "styrene-based polymer" refers to at least one polymer selected from the group consisting of polystyrene, styrene-ethylene-butylene-styrene copolymer, styrene-butadiene-styrene copolymer, styrene-isoprene-styrene copolymer, styrene-ethylene-butadiene-styrene copolymer, and styrene-(ethylene-propylene rubber)-styrene copolymer. As used herein the use of a "dash" (i.e., the "-") in a styrene-based polymer formula, is inclusive of both block copolymers and random copolymers. More particularly, the phrase "styrene-based polymer" includes both copolymers in which (i) all named monomers are present as a block, or (ii) any subset of the named monomers are present as a block with the remaining monomers being randomly arranged, or (iii) all named monomers are randomly arranged.

The term "polystyrene" as used herein refers to film grade homopolymers and copolymers of styrene and its analogues and homologs, including -methyl-styrene and ring-substituted styrenes, such as for instance ring-methylated styrenes. This term "polystyrene polymer" is used to identify single polymers or blends of different polystyrene polymers as indicated above.

Particularly preferred polystyrene resins are Styrolux 684D by BASF and Polystyrol 143E by BASF or "K resin KR53" by "Chevron Phillips Chemicals" which can be used either alone or in blend.

The outer abuse layer may have a thickness of a range from 5 mic. to 20 mic. In some embodiments, the outer abuse layer may have a thickness of a range from 5 mic. to 10 mic. In further embodiments, the outer abuse layer may have a thickness of 7 mic. The outer abuse layer may have a thickness of 10 mic.

The thickness of the outer abuse layer in relative percentage vs. the thickness of the whole films can range from 2 to 25%, preferably from 3% to 20%, more preferably 4 to 15%, even more preferably from 5 to 12%.

The amount of the resin of the abuse layer in the film according to the present invention is at least 3%wt, preferably at least 5%wt, even more preferable at least 6%wt of the total weight of the film.

The at least one inner bulk layer c) or "structural" layer generally comprises polymers used to improve the abuse or puncture resistance of the film, to provide the desired thickness and specifically to impart formability. Polymers suitable for these layers are typically ethylene homo- and co-polymers, e.g. low density polyethylene, ethylene-vinyl acetate copolymers, linear low density polyethylenes, linear very low density polyethylenes and ionomers, preferably ionomers and ethylene-vinyl acetate copolymers, more preferably ethylene-vinyl acetate copolymers.

Preferably the at least one inner bulk layer c) does not consist of polypropylene(s), more preferably it does not comprise polypropylene(s), even more preferably it does not comprise isotactic polypropylene(s).

Examples of suitable resins for the bulk layer c) are ESCORENE ULTRA FL00119 (Exxon Mobil), ELVAX 3165 (DuPont), Surlyn 1601 (DuPont).

The at least one inner bulk layer c) may have a thickness of a range from 10 mic. to 40 mic. In some embodiments, the at least one inner bulk layer may have a thickness of a range from 20 mic. to 30 mic. In further embodiments, the at least one inner bulk layer may have a thickness of 27 mic. The at least one inner bulk layer may have a thickness of 30 mic.

In some embodiments, the thermoplastic film may have 2 inner bulk layers.

In other embodiments, the thermoplastic film may have 4 inner bulk layers. Preferably, the films of the present invention comprise two bulk layers c) positioned on the opposite sides with respect to a barrier layer, said bulk layers comprising preferably the same polymers, more preferably ethylene-vinyl acetate copolymers. The thickness of the bulk layer(s) c) in the overall structure will depend mainly on the overall thickness desired for the film. Said thickness may be expressed as a percentage of the total thickness of the present film, and it generally ranges from 30 to 80%, preferably from 35 to 70%, more preferably from 40 to 60%.

Preferably, the total thickness of the bulk layer(s) c) in the overall structure is at least 30%, 35%, 40%, 45%, 50% or 60%.

In case the bulk layer c) is the second layer a') adhered to the outer layer a) and comprises the slip agent, it may also comprise other one or more sealable polymers as previously defined, preferably one or more polyolefins, particularly ethylene homo-and co-polymers and ionomers.

The at least one inner tie layer d) according to the present invention, if present, may comprise adhesive layers that are employed to better adhere one layer to another in the overall structure. In particular the film may include tie layer(s) d) directly adhered (i.e., directly adjacent) to one or both sides of the internal barrier layer e) and/or to one or both sides of the adjacent bulk layer(s) c). Additional tie layers may also be used to better adhere said bulk layer(s) c) to the adjacent sealant layer a) and /or outer abuse layer b).

Tie layers may include polymers having grafted polar groups so that the polymer is capable of covalently bonding to polar polymers such as EVOH or polyamides. Useful polymers for tie layers include ethylene-unsaturated acid copolymers, ethylene-unsaturated ester copolymers, anhydride-modified polyolefins, polyurethane, and mixtures thereof. Preferred polymers for tie layers include one or more of thermoplastic polymers such as ethylene-vinyl acetate copolymers with high vinyl acetate content (e.g. 18 - 28 wt. % or even more), ethylene-(meth)acrylic acid copolymers, ethylene homo-polymers or co-polymers, modified with anhydride or carboxylic acid functionalities, blends of these resins or blends of any of the above resins with an ethylene homo- or co-polymer, and the like known resins. Examples of suitable tie resins are OREVAC 18303 and OREVAC 18300 (Arkema). Tie layers are of a sufficient thickness to provide the adherence function, as it is known in the art. Each tie layer may be of a substantially similar or of a different composition and/or thickness.

The at least one inner tie layer may have a thickness in the range from 2 mic. to 20 mic. In some embodiments, the at least one inner tie layer may have a thickness in the range from 3 mic. to 10 mic. In other embodiments, the at least one inner tie layer may have a thickness in the range from 5 mic. to 10 mic. In further embodiments, the at least one inner tie layer may have a thickness of 9 mic. The at least one inner tie layer may have a thickness of 10 mic. In some embodiments, the thermoplastic film may have two inner tie layers.

In case the tie layer d) is the second layer a') adhered to the outer layer a) and comprises the slip agent, it may also comprise one or more sealable polymers as previously defined, preferably one or more polyolefins, particularly ethylene homo-and co-polymers, propylene homo- and co-polymers and ionomers.

The at least one inner barrier layer e) according to the present invention, if present, may comprise PVDC, polyamides, such as PA MXD6/MXDI, EVOH, polyesters, and blends thereof, preferably EVOH, optionally EVOH blended with polyamides.

The thickness of the gas-barrier layer e) will be set in order to provide the overall multi-layer sheet with the optimal Oxygen Transmission Rate (OTR), lower than 500 $cm^3/m^2$/day atm, preferably lower than 100, more preferably lower than 10, even more preferably lower than 7, when measured at 23°C and 0% of relative humidity (evaluated by following the method described in ASTM D-3985 and using an OX-TRAN instrument by Mocon).

Preferably, EVOH is used as the only component of the barrier layer.

Examples of suitable resins for the barrier layer e) are SOARNOL AT4403 or SOARNOL ET3803 or SOARNOL GH3804B (Nippon Gohsei), Eval E171B, (EVALCA/Kuraray), EVAL F101B (EVALCA/Kuraray).

The barrier layer e) may be the "core layer" of the thermoplastic film.

11

The at least one inner barrier layer may have a thickness of a range from 5 mic. to 20 mic. In some embodiments, the at least one inner barrier layer may have a thickness of a range from 8 mic. to 15 mic. In further embodiments, the at least one inner barrier layer may have a thickness of 13 mic. The at least one inner barrier layer may have a thickness of 15 mic. In some embodiments, the thermoplastic film may have one inner barrier layer.

Typically, when EVOH is employed as the only gas-barrier material, this is generally achieved with a thickness between 3 and 14 mic., preferably between 4 and 12 mic., more preferably between 5 and 10 mic. Thicker layers can be used if desired or if a lower OTR is needed.

The inner barrier layer e) may be the second layer a') of the present films but, typically, it does not comprise the slip agent.

Preferably, when the inner barrier layer e) is the second layer a') of the present films, the slip agent is only contained in the outer sealant layer a).

Preferably, the barrier layer e) does not comprise sealable polymers.

In case the barrier layer e) is the second layer a') adhered to the outer layer a) in order to achieve a sufficient adhesion, the first outer layer a) preferably comprises one or more modified polyolefin(s), such as those used in the tie layer d) as defined above.

In case the barrier layer e) is the only core layer, adhesion with the outer abuse layer b) can be similarly achieved by admixing the polymer(s) of the outer abuse layer with one or more modified polyolefin(s), such as those used in the tie layer d) as defined above.

In case the barrier layer e) is directly adhered to one or more bulk layer(s) c) adhesion with said layers can be similarly achieved by admixing the polymer(s) of the bulk layer(s) with one or more modified polyolefin(s), such as those used in the tie layer d) as defined above.

The films of the present invention may further comprises at least one polyamide layer adhered to said barrier layer e) or two layers adhered to the opposite surfaces of the barrier layer e). Said at least one or, preferably, two layer(s), are preferably directly adhered to the barrier layer e), i.e. without any interposed tie layer.

Said polyamide layer mainly comprises crystalline polyamides, generally in amount higher than 60% by weight of said layer composition, preferably higher than 80%, more preferably higher than 90%, even more preferably higher than 95%. Most preferably said polyamide layer consists of crystalline polyamides only.

With crystalline polyamides, a single crystalline polyamide or a blend or two or more crystalline polyamides is to be intended, preferably a single crystalline polyamide is intended.

The balance to 100% by weight of the composition of said polyamide layer(s) may be represented by suitable blendable thermoplastic materials or additives, such as for example ionomer- nylon alloy produced by Du Pont and commercialized under the tradename of Surlyn AM7927, and preferably not amorphous polyamides. Crystalline polyamides according to present invention are those polyamides whose melting point is preferably within the range from about 130 to 230°C, more preferably from about 160 to 220°C, even more preferably from about 185 to 210°C. Crystalline polyamides according to present invention comprise crystalline homo-polyamides and co-(or ter-) polyamides, preferably selected among PA6; PA6.6; PA6.66; PA66.6; PA6.12; PA6.66.12; PA12; PA11; PA6.9; PA6.69; PA6.10; PA10.10; PA66.610; PA MXD6/MXDI, more preferably selected among PA6; PA6.66; PA66.6; PA6.12; PA6.66.12; PA12; PA11; PA6.9; PA MXD6/MXDI, even more preferably among PA6; PA6.66; PA6.12; PA6.66.12; PA12; PA11, most preferably being said crystalline polyamide PA6.66, and blends thereof. Crystalline polyamides according to the present invention are, preferably, selected within the polyamides listed above, more preferably within those polyamides listed above having melting points falling within the range preferably from about 140 to 230°C, more preferably from about 160 to 220°C, even more preferably from about 185 to 210°C.

The thickness of said at least one polyamide layer is generally between 2 and 14 mic., preferably between 3 and 10 mic., even more preferably between 4 and 6 mic. In the preferred embodiment comprising two polyamide layers directly adhered to the opposite surfaces of the barrier layer e) the thickness of each layer is generally between 1 and 7 mic., preferably between 1.5 and 6 mic., even more preferably between 2 and 5 mic.

Preferably, in the present non-oriented thermoplastic film, the outer sealant layer a) and/or the outer abuse layer b) and/or a core layer, do not contain thermoplastic starches. More preferably, the film of the present invention does not contain thermoplastic starch in any of the layers.

The present film comprises an outer sealant layer a), an outer abuse layer b), at least one inner bulk layer c), and, optionally, one or more of at least one inner tie layer d), and at least one inner barrier layer e).

The present film comprises at least an outer sealant layer a), a second layer a') adhered thereto and an outer abuse layer b).

The present film may have at least 3 layers, at least 4 layers, at least 5 layers, at least 6 layers, at least 7 layers, at least 8 layers, at least 9 layers, at least 10 layers, at least 11 layers, at least 12 layers and at least 13 layers. In some embodiments, the film may have 7 layers.

Preferably, the present film may have from 3 to 9 layers, from 3 to 7 layers, from 5 to 7 layers.

Preferred embodiments of the present thermoplastic film may comprise:

a) an outer sealant layer,
b) an outer abuse layer, and
c) at least an inner bulk layer; or

a) an outer sealant layer,
b) an outer abuse layer,
c) at least an inner bulk layer, and
d) at least an inner tie layer; or

a) an outer sealant layer,
b) an outer abuse layer,
c) at least an inner bulk layer,
d) at least an inner tie layer, and
e) at least an inner barrier layer; or

Preferred embodiments of the present thermoplastic film may consist of:

a) an outer sealant layer,
b) an outer abuse layer, and
c) an inner bulk layer; or

a) an outer sealant layer,
b) an outer abuse layer,
c) an inner bulk layer, and
d) an inner tie layer; or

a) an outer sealant layer,
b) an outer abuse layer,
c) an inner bulk layer,
d) an inner tie layer, and
e) an inner barrier layer; or

a) an outer sealant layer,
b) an outer abuse layer,
c) two inner bulk layers,
d) two inner tie layers, and
e) an inner barrier layer; or

a) an outer sealant layer,
b) an outer abuse layer,
c) two inner bulk layers, and
e) an inner barrier layer.

The present film may be arranged so that the layers are in sequences generally selected among: a/c/b (3 layers), a/c/d/b, a/d/c/b, a/c/e/b, a/e/c/b (4 layers), a/d/c/d/b, a/c/e/d/b, a/c/e/c/b, a/c/d/c/d/b, a/d/c/e/c/d/b, (5 layers), a/c/d/e/d/c/b, a/c/d/c/d/c/b (7 layers), a/c/c/d/e/d/c/c/b, a/c/d/e/e/e/d/c/b, (9 layers), and all the possible sequences which result by introducing in said structures from 2 to 13 layers.

The sequence a/c/d/e/d/c/b is particularly preferred.

Where the multi-layer film sequences represented above include the same letter more than once, each occurrence of the letter may represent the same composition or a different composition within the class that performs a similar function.

The film of the present invention may have any total thickness, so long as the film provides the desired properties (e.g. easy opening, formability, abuse, puncture resistance, machinability, seal strength etc.) for use as VSP top film.

The total thickness of the film according to the present invention may be in a range from 50 mic. to 150 mic., preferably 50 mic. to 100 mic., more preferably 75 mic. to 100 mic. The film may have a thickness of 50 mic., 60 mic., 70 mic., 80 mic., 90 mic., 100 mic., 110 mic., 120 mic., 125 mic., 150 mic., and any range between these values. In some embodiments, the film may have a thickness of 100 mic.

The films according to the present invention are non heat-shrinkable, namely they have an unrestrained linear thermal shrinkage (free shrink percentage) at 160°C (in oil) in both the machine and transverse directions of less than 15%, preferably less than 10% or than 5% as measured according to ASTM D-2732 Test Method, which is incorporated herein by reference in its entirety.

Preferably, the present film is cross-linked.

The present film is preferably characterized by:

- a gel content calculated with respect to the whole film or to that portion of the film made of polymers which are soluble in toluene when non cross-linked, of not less than 25%, preferably not less than 40%, more preferably not less than 60% by weight, according to the test method reported in the description and /or
- a melt flow index (MFI) of the whole film measured at 230°C, 21.6 kg, according to ASTM D-1238 (which is incorporated herein by reference in its entirety), not higher than 4 g/10min, not higher than 3 g/10 min, preferably not higher than 2 g/10 min, more preferably not higher than 1 g/10 min, even more preferably of about 0 g/10 min and /or
- a melt flow index (MFI) of the whole film measured at 230°C, 2.16 kg, according to ASTM D-1238 (which is incorporated herein by reference in its entirety), not higher than 2 g/10 min, preferably not higher than 1 g/10 min, even more preferably of about 0 g/10 min.

The present film has an implosion resistance, measured according to the test method provided herein (Experimental part), of at least 6 mm, preferably at least 8 mm, even more preferably at least 10 mm.

The present film has a very good formability, in particular such film exhibits a formability score for both webbing and bridging (longitudinal, transverse and circular) measured by following the test method provided herein (Experimental part) of at least 2, preferably at least 2.5, even more preferably at least 2.8.

Finally, the films according to the present invention may be printed by any common method known in the art.

Methods of Making the Disclosed Film

A vacuum skin packaging, non-oriented thermoplastic film suitable for use as a top film may be prepared according to a method comprising

i) blending one or more sealable polymer(s) with one or more slip agent(s) to form an outer sealant layer a),
ii) optionally, blending one or more sealable polymer(s) with one or more slip agent(s) to form a second layer a') to be adhered to the outer sealant layer a), wherein the outer sealant layer a) or
the outer sealant layer a) together with the second layer a') adhered thereto, comprise greater than 0.10% by weight of slip agent(s);
iii) coextruding the outer sealant layer a), the second layer a') adhered thereto, the outer abuse layer b), an inner bulk layer c) and, optionally, one or more of an inner tie layer d) and an inner barrier layer e), and
iv) optionally, cross-linking the film,
thus providing the vacuum skin packaging non-oriented thermoplastic film suitable for use as a top film.

The method for making the present films does not include an orientation step. One or more of the preferred features previously listed for the film of the invention, are preferred in the method for the manufacture thereof as well.

Preferably, the total content of slip agent(s) in the outer sealant layer a) or in the outer sealant layer a) and in the second layer a') adhered thereto,
is greater than 0.15%, 0.20%, 0.25%, 0.30%, 0.33% by weight with respect to layer a) weight or to layer a) and second layer a') total weight respectively.

In some embodiments, the slip agent may be erucamide.

In some embodiments, the polyolefin may be LLDPE.

The outer sealant layer a) may be coextruded with an outer abuse layer b) and at least one inner bulk layer c). In some embodiments, the outer sealant layer a) may be coextruded with an outer abuse layer b), at least one inner bulk layer, c) at least one inner tie layer d), and at least one inner barrier layer e).

In other embodiments, the sealant layer may be coextruded with an outer abuse layer, two inner bulk layers, two inner tie layers, and one inner barrier layer.

The prepared thermoplastic film may be coextruded or laminated.

The films of the present invention can be made by a coextrusion process as described in U.S. Pat. No. 4,287,151 that involves coextrusion through a round extrusion die, such process being the preferred one.

The present films can also be manufactured by a flat cast coextrusion process through a flat extrusion die. Suitable round or flat sheet multilayer coextrusion dies for coextruding the films of the invention are well known in the art.

Preferably, for use as the top film of a VSP package, the film of the present invention is non-oriented.

The present films are preferably crosslinked by any chemical, low or high radiation method or combination thereof. The preferred method of crosslinking is by electron-beam irradiation and it is well known in the art. One skilled in the art can readily determine the radiation exposure level suitable for a particular application. Generally, however, radiation dosages of up to about 250 kGy are applied, typically from 80 to 240 kGy, with a preferred dosage of from 90 to 230 kGy, and a most preferred one from 110 to 220 kGy.

As known in the art, the level of cross-linking also depends on the chemical nature of the thermoplastic polymers, which may provide fully or partially cross-linked films. Cross-linking provides the film with properties particularly advantageous in VSP applications.

In particular, the present, preferably at least partially cross-linked, film is characterized by:

- a gel content calculated with respect to the whole film or to that portion of the film made of polymers which are soluble in toluene when non cross-linked, of not less than 25%, preferably not less than 40%, more preferably not less than 60% by weight, according to the test method reported in the description and /or
- a melt flow index (MFI) of the whole film measured at 230°C, 21.6 kg, according to ASTM D-1238 (which is incorporated herein by reference in its entirety), not higher than 4 g/10min, not higher than 3 g/10 min, preferably not higher than 2 g/10 min, more preferably not higher than 1 g/10 min, even more preferably of about 0 g/10 min and /or
- a melt flow index (MFI) of the whole film measured at 230°C, 2.16 kg, according to ASTM D-1238 (which is incorporated herein by reference in its entirety), not higher than 2 g/10 min, preferably not higher than 1 g/10 min, even more preferably of about 0 g/10 min.

## Vacuum Skin Packaging Using the Disclosed Film and Vacuum Skin Packages

Vacuum skin packaging is a well known process where a thermoplastic packaging material, for example a film, is used to enclose an article.

A vacuum skin package may include a non-oriented top film with an outer sealant layer a) (hereinafter the second sealant layer a) in the present package), a bottom support with an outer sealant layer or a sealant surface (hereinafter referred as the first sealant layer in the present package) and an article packaged therein.

The vacuum skin package comprises as top thermoplastic film the present non-oriented thermoplastic film as described above.

The top thermoplastic film may substantially conform to both an upper surface of the article and a portion of the bottom support not covered by the article.

The top thermoplastic film comprises the second sealant layer, namely the outer sealant layer a), which comprises, at least in part, one or more slip agents.

The second sealant layer a) may include a polyolefin with a density of less than about 0.94 g/cm$^3$ and greater than 0.1% by weight of a slip agent. The slip agent amount in the top thermoplastic film may be based on layer weight. The second sealant layer a) may comprise LLDPE and 0.35% by weight of erucamide

In particular the present vacuum skin package, comprises

- a bottom support comprising a first outer sealant layer,
- an article loaded on top of the bottom support, and
- as top film the present non-oriented thermoplastic film, as previously described, comprising a second outer sealant layer a),

the top film substantially conforming with both an upper surface of the article and a portion of the bottom support not covered by the article, and wherein the top film second outer sealant layer a) is sealed to the first outer sealant layer of the bottom support in the portion not covered by the article.

The top film of the present vacuum skin package is characterized by one or more of the features of the present film, as described above, taken alone or in combination. The bottom support may consist of

- a bottom monolayer or multilayer thermoplastic film only or of
- a bottom mono or multilayer thermoplastic film adhered to a support member.

In some embodiments, the bottom support may be a thermoplastic film. In other embodiments, the bottom support may be a thermoformed tray.

The bottom support may be flat or tray shaped, e.g. tray-shaped, bowl-shaped or cup-shaped. If shaped, the bottom support may be in-line thermoformed or an off-line pre-made tray.

The bottom support may be rigid, semi-rigid or flexible.

In some embodiments, the bottom support is made of a bottom monolayer thermoplastic film only. In such a case, sealability and adhesion may be improved through suitable treatments of the support surface known in the art such as corona treatment.

In some embodiments, the bottom support is made of a bottom multilayer thermoplastic film only. Preferably, the bottom multilayer thermoplastic film comprises at least a heat-sealable layer and an outer abuse resistant layer. Preferably, the bottom multilayer thermoplastic film comprises a seal layer and one or more other layers, such as barrier layers, bulk layers, tie layers, and an outer abuse resistance layer.

Preferably, the heat sealable layer comprises one or more of the polymers previously listed for the top film outer layer a), such as modified or unmodified polyolefins, like ethylene homo- or co-polymers, propylene homo- or co-polymers, ethylene/vinyl acetate copolymers, ethylene-acrylic acid copolymers, ethylene-alkyl acrylate copolymers, ethylene-methacrylic acid copolymers, ethylene-alkyl methacrylate copolymers, ethylene-alkyl acrylate-maleic anhydride copolymers, ionomers and their admixtures. Preferably the heat sealable layer comprises one or more of the polymers selected from the group comprising ethylene/alpha olefin copolymer, LLDPE, VLDPE, LDPE, MDPE, EAA, EMAA, EVA, or ionomer, even more preferably, it comprises ionomer, LLDPE, EVA or admixtures thereof. Suitable sealant layers may also include peelable blends to facilitate the package opening.

Preferably, the bottom multilayer thermoplastic film comprises, in addition to a heat-sealable layer to allow welding of the top film to the part of the bottom support not covered by the article, at least one bulk layer to provide good mechanical properties. The multilayer bottom film, in addition to the sealable layer generally comprises at least one bulk layer, preferably comprising one or more polymers such as polyethylene, polystyrene, polyester, poly(vinyl chloride (PVC), polypropylene or polyamides.

In a number of applications, the bottom support is also required to have gas barrier properties, in particular oxygen barrier properties.

Thus, in addition to at least one bulk layer and an outer sealant layer, the bottom multilayer web, is provided with at least one inner barrier layer. The thickness of the barrier layer will be typically set in order to provide the film with an oxygen transmission rate lower than 30, lower than 15, preferably lower than 10 $cm^3/m^2/d$ atm (evaluated at 23°C and 0%RH by following the method described in ASTM D-3985 and using an OX-TRAN instrument by Mocon).

In a preferred embodiment, the bottom film consists of a seal layer and a bulk layer only. Preferably, the seal layer is a polyethylene base layer and the bulk layer is a polyester or polypropylene based layer.

In a preferred embodiment, the bottom film consists of a seal layer, a barrier layer and a bulk layer only. Preferably, the seal layer is a polyethylene base layer, the barrier layer is an EVOH based layer and the bulk layer is a polyester or polypropylene based layer.

The polypropylene polymers used in the present bottom supports include homopolypropylene, copolypropylenes and their blends.

In a preferred embodiment, the bottom support is made of a bottom flexible web.

In some embodiments, the bottom support is made of a flexible web having the same composition of the top film.

Preferably, the bottom flexible web additionally includes an easy opening (EZO) layer comprising a cohesive failure blend as previously defined.

In a preferred embodiment, the bottom support comprises an EZO layer comprising a cohesive failure blend of polymers, such as the binary blends disclosed in EP192131B1 or the improved ternary blends of WO99/54398A1.

This system is based on the different chemical nature of the components. The polymers are only partially compatible and consequently the material fails when a transversal force is applied to this layer thus opening the package.

Preferably, the bottom film has a thickness lower than 1000 mic., than 800 mic., than 600 mic., than 500 mic., than 400 mic., than 300 mic.

Preferably, the bottom film has a thickness from 50 to 1000 mic., more preferably of 80 to 500 mic., even more preferably from 150 to 350 mic.

In some embodiments, the thickness of the bottom support may be 280 mic.

In a preferred embodiment, the bottom film is the present top film as previously defined.

In other embodiments, the bottom support is a rigid tray having a total thickness lower than 1000 mic., than 800 mic., than 600 mic., than 500 mic., than 400 mic., than 300 mic.

As an alternative, the bottom support may include a bottom mono or multilayer thermoplastic film adhered to a support member. In this case, the thermoplastic film is also called "liner" and may consist of a monolayer of sealable polymer(s) only or of a multilayer bottom film, as previously described, comprising at least an outer sealable layer and a bulk layer.

The adhesion between the bottom thermoplastic film and the support member is generally effected by hot or glue lamination, coating and the likes.

The support member may be made of thermoplastic and/or non-thermoplastic materials. In some embodiments, the support member is a monolayer relatively thick thermoplastic material, preferably made of polypropylenes, polyesters, PVC or HDPE.

In some embodiments, the support member comprises or it is made of non-thermoplastic materials such as for instance cardboard or aluminum.

In some embodiments, the bottom support comprises a support member made of a single sheet of non-plastic material - such as for instance, a cardboard or aluminum - suitably laminated or coated with a monolayer bottom film made of a sealable layer only (liner), which improves the welding between the top film and the bottom support.

In some embodiments, the bottom support comprises a support member made of a single sheet of non-plastic material such as for instance, cardboard or aluminum suitably laminated or coated with a multilayer thermoplastic film as described above. In such a case, preferably, the bottom film does not include a bulk layer; more preferably, it consists of a seal layer and, optionally, a barrier layer only.

In some embodiments, thermoplastic materials may be used to provide a barrier layer in the bottom support. Suitable thermoplastic materials with low oxygen transmission characteristics with gas barrier properties are PVDC, EVOH, polyamides, polyesters or blends thereof. PVDC is any vinylidene chloride copolymer wherein a major amount of the copolymer comprises vinylidene chloride and a minor amount of the copolymer comprises one or more unsaturated monomers copolymerisable therewith, typically vinyl chloride, and alkyl acrylates or methacrylates (e.g. methyl acrylate or methacrylate) and the blends thereof in different proportions. Generally, a PVDC barrier layer will contain plasticizers and/or stabilizers as known in the art. EVOH is a saponified or hydrolyzed ethylene-vinyl acetate copolymers, and refers to vinyl alcohol copolymers having an ethylene comonomer content preferably comprised from about 27 to about 48 mole %, more preferably, from about 32 to about 44 mole % ethylene, and even more preferably, from about 36 to about 42 mole % ethylene, and a saponification degree of at least 85 %, preferably at least 90 %.

Additional layers, such as tie layers, to better adhere the barrier layer to the adjacent layers, may be present in the bottom film material of the bottom support and are preferably present, depending in particular on the specific resins used for the at least one inner barrier layer.

In case of a multilayer bottom film, part can be foamed and part can be not foamed (solid). For instance, the bottom support may comprise (from the outermost support member to the innermost food-contact layer) one or more structural layers, typically of a material such as polystyrene, polyester, poly(vinyl chloride), polypropylene or cardboard; a gas barrier layer and a sealant layer.

The bottom support for the present package, can be polyester-based, namely can be substantially made of polyester(s). The polyesters may be the substantial components of the bottom film and/or of the support member. In case the seal strength to the top film resulted too weak, an outer sealant layer (the first sealant layer in the present package) may be provided or the surface may be subjected to a suitable superficial treatment.

The polyester based support member may be a monolayer or multilayer structure, suitably lined with at least a sealant layer.

Preferred polyesters are selected from the group consisting of polyethylene terephthalate (PET), crystalline polyethylene terephthalate (CPET), amorphous polyethylene terephthalate (APET), PETg and blends thereof.

Polyester based bottom supports generally include a so-called liner. Typically, the surface of the bottom support in contact with the article, i.e. the surface involved in the formation of the seal with the top film, may comprise a polyolefin or polyester resin, usually an amorphous polyester resin (APET). For instance, the bottom support can be made of cardboard coated with polyester or it can be integrally made of a polyester resin.

Examples of preferred support members for the package of the invention are CPET, APET, APET/CPET, either foamed or not foamed, i.e. solid, aluminum or cardboard supports. The support members to be used in combination with the present film may be pigmented.

In a preferred embodiment, the bottom support includes at least one hole, in particular a pre-made or made-in line hole.

The at least one hole advantageously allows vacuuming the package more rapidly and efficiently, as detailed for instance in WO2014060507A1, WO2011/012652 and WO2014/060507 in the name of the Applicant.

Optionally, the bottom support is provided with a pre-cut made on the bottom film. This pre-cut facilitates the opening of the package by the consumer, who grasps and tears the thus formed tab and peels off the top film.

For microwave applications, the bottom support will be made of substantially microwave transparent materials, such as for instance PP, PE, CPET, preferably of PP or CPET. In particular, bottom solid supports comprising a polymer with a relatively high melting point such as polypropylene, polystyrene, polyamide, 1,4-polymethylpentene or crystallized polyethylene terephthalate (CPET) are preferred. Solid polypropylene is particularly preferred because of its strength, its ability to support a food product, and its relatively high melting point. Other materials will be more or less desirable for microwave applications depending on their physical characteristics such as those described above.

In the present vacuum skin package, wherein the bottom support includes a support member, preferably the bottom support has a total thickness lower than 6000 mic., 4000 mic., 2000 mic., 1000 mic.

Preferably, the bottom support has a total thickness of from 100 to 6000 mic., more preferably of from 150 to 4000 mic., even more preferably from 180 to 2000 mic., particularly preferably from 200 to 1000 mic.

The vacuum skin package may include an article loaded on top of the bottom support. The article may be a product, preferably but not necessarily a food product. In the preferred embodiment, the VSP package of the present invention comprises an article, preferably a food product such as for instance fresh red meats, processed meat, such as sausages, cheese, ready to eat or prepared meals, fish, food products provided with highly irregular and sharp surfaces, like bon-in meat, frozen products crustaceans or shellfish and the like.

The present vacuum skin package may be an easy to open (EZO) package. The "EZO" feature allows for manual opening by pulling apart the top thermoplastic film and the bottom support, normally starting from a point like a corner of the package where the top film has purposely not been sealed to the bottom support.

The easy-to-open packages of the prior art essentially exploited three opening mechanisms.

In the first one ("peelable easy opening') the package is opened by separating the two webs at the seal interface. In such a case, the opening mechanism can be based on the different chemical nature of the top film and bottom support. The sealant resins of the top film and the bottom support are only partially compatible and consequently the seals fail when a transversal force is applied to the package opening.

In the second mechanism ("adhesive failure') the opening of the package is achieved through delamination of the seal layer - of the bottom or of the top web - from the underlying remaining layer(s) of the support or of the top respectively. When the delamination reaches the area of the packed products, a second breakage through the sealing layer takes place and a portion of sealing layer is left sealed to the opposite web.

The third system is based on a "cohesive failure" mechanism. In this latter system, easy opening is achieved by internal rupture of a layer comprising a frangible blend that, during opening of the package, breaks along a plane parallel to the layer itself. Preferably, the present package comprises an EZO layer comprising a frangible blend (cohesive failure blend) as those described for instance in EP192131B1 or in WO9954398A1. The frangible blend may be placed in the bottom film of the bottom support or in the present top film, in an arrangement and with cohesive failure blends as exemplarily illustrated in the present Example 4 and in the co-pending patent application n. EP16158986 in the name of the Applicant.

The opening strength of the present EZO package including a layer of a frangible blend in the top film or in the bottom film of the bottom support is typically comprised in the range of from about 2.00 to about 6.00 N/2.54 cm, more preferably in the range of from about 2.50 to about 5.00 N/2.54 cm, when measured according to ASTM F 88.

The % variation ($3\sigma$) on the average value of the easy opening strength is lower than about 55%, and generally lower than 35%, resulting in reproducible EZO packages.

Method for manufacturing the present vacuum skin packages

The present vacuum skin package may be prepared by providing a bottom support including a first outer sealant layer. The bottom support may preferably have a thickness less than 8 millimeters. An article may be placed on top of the bottom support. The bottom support loaded with the article may then be placed into a vacuum chamber. A top non-oriented thermoplastic film, which is the present film, may be provided over the bottom support having the article thereon.

In some embodiments, the top non-oriented thermoplastic film may be pre-heated. The top thermoplastic film and bottom support may be separately fed to a packaging station where the top thermoplastic film is further heated by contact with the inner surface of a so-called "dome" which is then lowered over the supported item. Atmosphere can be evacuated from a region between the bottom support and the top thermoplastic film. The top thermoplastic film may be held against the dome inner surface for instance by vacuum pressure that is then released when it is desired to allow the top thermoplastic film, to drape over the bottom support loaded with an article. The top thermoplastic film may be heated to a softening point to produce a softened, conformable top thermoplastic film. The softened, conformable top thermoplastic film may be draped over both an upper surface of the article and a portion of an upper surface of the bottom support not covered by the article. The method may further include sealing the first outer sealant layer to the second outer sealant layer a) in a region in which the first outer and second outer sealant layers come into direct contact with one another, by differential air pressure, advantageously without the bottom support undergoing substantial distortion as a result of the sealing of the first outer sealant layer to the second outer sealant layer a).

An airtight contact may be formed between the top thermoplastic film and the bottom support before air is evacuated from within the vacuum skin package.

In some embodiments, an additional heating bar heats the top thermoplastic film circumferentially, and the top film is then pushed into contact with the article. Preferably, the method of manufacturing a vacuum skin package comprises the steps of:

> a. providing a bottom support including a first outer sealant layer;
> b. placing an article on top of the bottom support;
> c. providing a non-oriented top thermoplastic film including a second sealant layer a) - which is the present film - over the bottom support having the article thereon, wherein the second sealant layer a) of the top film faces the bottom support;
> d. heating the top thermoplastic film to a softening point to produce a softened, conformable top thermoplastic film;
> e. evacuating the atmosphere from a region between the bottom support and the top thermoplastic film;

f. draping the softened, conformable top thermoplastic film over both an upper surface of the article and a portion of an upper surface of the bottom support not covered by the article; and

g. sealing the first outer sealant layer to the second outer sealant layer a) in a region in which the first outer and second outer sealant layers come into direct contact with one another by differential air pressure.

Preferable in the present method of manufacturing a vacuum skin package, the heating of the top thermoplastic film during the vacuum skin packaging cycle is effected at a dome temperature lower than 220°C, preferably lower than 210°C, than 200°C, than 190°C, than 180°C, than 170°C, than 160°C, even lower than 150°C, or of 140°C or even lower.

Preferable in the present method of manufacturing a vacuum skin package, the portion of the first outer sealant layer of the bottom support sealed to the second outer sealant layer a) of the top is greater than 70%, 80%, 90%, 95% of the total sealant surface of the bottom support not covered by the article.

Use of the Disclosed Film for vacuum skin packaging

The presently disclosed subject matter is also directed to the use of the thermoplastic film of the invention as a top film for vacuum skin packaging, being said film characterized by a thickness of a range from 50 mic. to 150 mic., preferably 50 mic. to 100 mic., more preferably 75 mic. to 100 mic. The film may have a thickness of 50 mic., 60 mic., 70 mic., 80 mic., 90 mic., 100 mic., 110 mic., 120 mic., 125 mic., 150 mic., and any range between these values. In some embodiments, the film may have a thickness of 100 mic.

The film of the invention is preferably used in combination with a bottom support having a first outer sealant layer comprising polyolefins as herein defined, such as ethylene homo- or co-polymers, propylene homo- or co-polymers, ethylene/vinyl acetate copolymers, ethylene-acrylic acid copolymers, ethylene-alkyl acrylate copolymers, ethylene-methacrylic acid copolymers, ethylene-alkyl methacrylate copolymers, ethylene-alkyl acrylate-maleic anhydride copolymers, ionomers. More preferably, the sealing layer of the support to be sealed to the film of the present invention comprises ethylene homo- or co-polymers, propylene homo- or co-polymers, ethylene/vinyl acetate copolymers, ethylene-acrylic acid copolymers, and combinations thereof.

Advantageously, the present film is used as top film in VSP packages comprising rather thin bottom supports without resulting in distorted packages due to the sealing of the first outer sealant layer of the bottom support to the second outer sealant layer a) of the top film at particularly low temperatures.

EXPERIMENTAL PART

EXAMPLES

The following Examples provide illustrative embodiments. In light of the present disclosure and the general level of skill in the art, those of ordinary skill in the art will appreciate that the following Examples are intended to be exemplary only and that numerous changes, modifications, and alterations can be employed without departing from the scope of the presently disclosed subject matter.

EXAMPLE 1

Comparative Testing of Samples 1 and 2 as Top films on a Bottom film

Two compositions of a thermoplastic film were prepared where the compositions were the same, except that Sample 1 had no slip agent and Sample 2 did have a slip agent.

The information for the film layer ingredients including tradename, supplier and features of each are included in Table 1 below:

Table 1

| Layer Ingredient Details | | | | | | |
|---|---|---|---|---|---|---|
| Trade name | Supplier | Chemical Nature | Acronym | Analysis | Value | Units |
| ELVAX 3165 | DuPont | Ethylene/Vinyl Acetate Copolymer | EVA1 | Density | 0.940 | g/cm$^3$ |
| | | | | Melt Flow Rate (190°C / 02.16 kg) | 0.70 | g/10 min |
| | | | | Melting Point | 87.0 | °C |
| | | | | Vicat Soft. point | 69.0 | °C |
| | | | | Com. content | 18 | % |
| ELVAL OY 741 | DuPont | Modified Ethylene/Vinyl Acetate Copolymer | EVA2 | Density | 1 | g/cm$^3$ |
| | | | | Com. content | 24 | % |
| | | | | Melting Point | 66 | °C |
| ESCOR ENE ULTRA FL0090 9 | Exxon Mobil | Ethylene/Vinyl Acetate Copolymer | EVA3 | Density | 0.928 | g/cm$^3$ |
| | | | | Melt Flow Rate (190°C / 02.16 kg) | 9 | g/10 min |
| | | | | Com. content | 9.4 | % |
| Surlyn 1601 | DuPont | Sodium Neutralized Ethylene Methacrylic Acid Copolymer | EMAA-Na | Density | 0.940 | g/cm$^3$ |
| | | | | Melt Flow Rate (190°C / 02.16 kg) | 1.30 | g/10 min |
| | | | | Melting Point | 96 | °C |
| QUEO 2M131 | Borealis | Polyethylene, Very Low Density Ethylene/Octe ne Copolymer - Linear, Single Site | VLDPE | Melt Flow Rate | 7 | g/10 min |
| | | | | Density | 0.902 | g/cm$^3$ |
| 10,075A CP SYLOID CONCE NTRAT E | Teknor Color | Silica in Polyethylene Low Density | LDPE1 | Density | 0.97 | g/cm$^3$ |
| | | | | Moisture Content | Max. 0.20 | % |
| | | | | Melt Flow Rate | 3 | g/10 min |
| | | | | Additives (Anti block) | 10 - 15 | % |
| 10090 | Ampacet | Amide Wax in Polyethylene Low Density - 5% wt Erucamide | LDPE2 | Density | 0.925 | g/cm$^3$ |
| LD259 | Exxon Mobil | Polyethylene Low Density Homopolymer - Free Radical | LDPE3 | Density | 0.915 | g/cm$^3$ |
| | | | | Melting point | 105 | °C |
| | | | | MFR | 12 | g/10 min |

(continued)

| Layer Ingredient Details | | | | | | |
|---|---|---|---|---|---|---|
| Trade name | Supplier | Chemical Nature | Acronym | Analysis | Value | Units |
| OREVA C 18303 | Arkema | Maleic Anhydride-Modified Polyethylene Linear Low Density | LLDPE-md1 | Density | 0.917 | g/cm$^3$ |
| | | | | Vicat soft. point | 87 | °C |
| | | | | Melting Point | 124 | °C |
| BYNEL 4125 | DuPont | Maleic Anhydride-Modified Polyethylene Linear Low Density | LLDPE-md2 | Density | 0.930 | g/cm$^3$ |
| | | | | Melt Flow Rate (190°C / 02.16 kg) | 2.50 | g/10 min |
| | | | | Melting Point | 126.0 | °C |
| | | | | Vicat Soft. point | 109 | °C |
| OREVA C 18300 | Arkema | Maleic Anhydride-Modified Polyethylene Linear Low Density | LLDPE-md3 | Density | 0.916 | g/cm$^3$ |
| | | | | Melt Flow Rate (190°C / 02.16 kg) | 2.3 | g/10 min |
| | | | | Melting Point | 120 | °C |
| | | | | Vicat Soft. point | 85 | °C |
| ADMER NF518E | Mitsui Chemical | Maleic Anhydride-Modified Polyethylene Linear Low Density | LLDPE-md4 | Density | 0.91 | g/cm$^3$ |
| | | | | Melting point | 118 | °C |
| | | | | Melt Flow Rate | 3.1 | g/10 min |
| E171B | Evalca Kuraray | Hydrolyzed Ethylene/Vinyl Acetate Copolymer | EVOH1 | Density | 1.14 | g/cm$^3$ |
| | | | | Melt Flow Rate (190°C / 02.16 kg) | 1.7 | g/10 min |
| | | | | Melting Point | 165 | °C |
| | | | | Glass Transition | 54 | °C |
| | | | | Com. content | 44 | % |
| | | | | Vicat soft. point | 152 | °C |
| | | | | Cryst. point | 144 | °C |
| Soarnol GH3804 B | Nippon Gohsei | Hydrolyzed Ethylene/Vinyl Acetate Copolymer | EVOH2 | Com. content | 44 | % |
| | | | | Density | 1.15 | g/cm$^3$ |
| | | | | Melt Flow Rate | 3.8 | g/10 min |

(continued)

| Layer Ingredient Details | | | | | | | |
|---|---|---|---|---|---|---|---|
| Trade name | Supplier | Chemical Nature | Acronym | Analysis | Value | Units |
| SOARN OL ET3803 | Nippon Gohsei | Hydrolyzed Ethylene/Vinyl Acetate Copolymer | EVOH3 | Density | 1.17 | g/cm$^3$ |
| | | | | Melt Flow Rate (:210°C, 2.16 Kg) | 3.2 | g/10 min |
| | | | | Melting Point | 173 | °C |
| | | | | Volatile Content | Max. 0.3 | % |
| | | | | Moisture Content | Max 0.3 | % |
| | | | | Com. content | 38 | % |
| | | | | Glass Transition | 58 | °C |
| | | | | Cryst. point | 152 | °C |
| SOARN OL AT4403 | Nippon Gohsei | Hydrolyzed Ethylene/Vinyl Acetate Copolymer | EVOH4 | Cryst. point | 144 | °C |
| | | | | Density | 1,140 | g/cm$^3$ |
| | | | | mp | 164 | °C |
| | | | | MFR | 3.5 | g/10 min |
| | | | | Com. cont. | 44 | % |
| EXCEE D 4518PA | Exxon Mobil | Polyethylene Linear Low Density Ethylene/Hexe ne Copolymer - Linear, Single Site | LLDPE1 | Density | 0.918 | g/cm$^3$ |
| | | | | Melting point | 114.0 | °C |
| | | | | Melt Flow Rate | 4.50 | g/10 min |
| CONST AB AB 06051 LD | IMCD Italia spa | Silica in Polyethylene, Linear Low Density | LLDPE2 | Density | 1,03 | g/cm$^3$ |
| | | | | Particle sz | 10 | micron |
| | | | | Ash | 20 | % |
| | | | | MFR | 3.3 | g/10 min |
| 100041 | Ampacet | Amide Wax in Polyethylene Linear Low Density - 5% wt Erucamide | LLDPE3 | Density | 0.92 | g/cm$^3$ |
| | | | | Melt Flow Rate (ASTM-D1238) | 2.4 | g/10 min |
| | | | | Bulk (Apparent) Density | 0.58 | g/cm$^3$ |
| | | | | Moisture Content | 0.2 | % |

(continued)

| Layer Ingredient Details | | | | | | |
|---|---|---|---|---|---|---|
| Trade name | Supplier | Chemical Nature | Acronym | Analysis | Value | Units |
| T60-500-119 | Ineos | Polyethylene High Density Homopolymer | HDPE1 | Density | 0.961 | g/cm$^3$ |
| | | | | Melt Flow Rate | 6.20 | g/10 min |
| | | | | Melting point | 135 | °C |
| HDPE F0863 | SABIC | Polyethylene High Density Homopolymer | HDPE2 | Density | 0.964 | g/cm$^3$ |
| | | | | Melt Flow Rate | 8 | g/10 min |
| | | | | Melting point | 134 | °C |
| | | | | Melt Flow Rate | 7 | g/10 min |
| Polybutene-1 0300M | Lyondell Basell Industries | Polybutylene, Butene Homopolymer | PB1 | Density | 0.915 | g/cm$^3$ |
| | | | | Melt Flow Rate | 4 | g/10 min |
| | | | | Melting point | 113 - 117 | °C |
| Polybutene-1 PB 8640M | Lyondell Basell Industries | Polybutylene, Butene/Ethylen e Copolymer | PB2 | Density | 0.906 | g/cm$^3$ |
| | | | | Melt Flow Rate (190°C / 02.16 kg) | 1 | g/10 min |
| | | | | Melting Point | 97 | °C |
| EASTA R PETG 6763 | Eastman Chemical | Polyethylene Terephthalate/ Glycol, copolyester of terephthalic acid, 33 mole % 1,4-cyclohexane dimethanol and 67 mole % ethylene glycol | PETG | Density | 1.27 | g/cm$^3$ |
| | | | | Melt Flow Rate (200°C / 05 kg (G) | 2.8 | g/10 min |
| | | | | Viscosity Intrinsic | 0.75 | dl/g |
| | | | | Glass Transition | 80 | °C |
| | | | | Vicat soft. point | 85 | °C |
| PLEXA R PX1164 | Nippon Gohsei | Maleic Anhydride-Modified Ethylene/Vinyl Acetate Copolymer | EVA-md1 | Density | 0.928 | g/cm$^3$ |
| | | | | Melt Flow Rate (190°C / 02.16 kg) | 3.8 | g/10 min |
| | | | | Vicat Soft. point | 58 | °C |
| | | | | Com. content | 15 | % |

(continued)

| Layer Ingredient Details | | | | | | | |
| --- | --- | --- | --- | --- | --- | --- | --- |
| Trade name | Supplier | Chemical Nature | Acronym | Analysis | Value | Units |
| OREVA C 9318 | Arkema | Maleic Anhydride-Modified Ethylene/Vinyl Acetate Copolymer | EVA-md2 | Density | 0.945 | g/cm$^3$ |
| | | | | Melt Flow Rate (190°C / 02.16 kg) | 7 | g/10 min |
| | | | | Melting Point | 85 | °C |
| | | | | Com. content | 18 | % |
| STYRO N 678E | DOW | Polystyrene | PS | Density | 1.05 | g/cm$^3$ |
| | | | | Melt Flow Rate (200°C / 05 kg (G) | 10.5 | g/10 min |
| STYRO LUX 684 D | BASF | Styrene/ Butadiene Copolymer - Styrene/Butadi ene/Styrene Triblock | SBS | Density | 1.01 | g/cm$^3$ |
| | | | | Melt Flow Rate (Cond. 200°C/05 kg (G) | 11 | g/10 min |
| | | | | Glass Transition | 98 | °C |
| | | | | Vicat soft. point | 83 | °C |
| NUCRE L 1202 | DuPont | Ethylene/ Methacrylic Acid Copolymer | EMAA | Com. content | 12 | % |
| | | | | Density | 0.94 | g/cm$^3$ |
| | | | | Melting point | 99 | °C |
| | | | | Melt Flow Rate | 1.5 | g/10 min |
| | | | | Vicat soft. point | 75 | °C |
| ADMER QB 520E | Mitsui Chemical | Maleic Anhydride-Modified Polypropylene | PP-md | Density | 0.9 | g/cm$^3$ |
| | | | | Melt Flow Rate | 1.8 | g/10 min |
| | | | | Vicat soft. point | 140 | °C |
| | | | | Melting point | 161 | °C |

The film layers and compositions are described in Table 2 below for both samples. In the film Sample 2, 7% by weight of a master batch formulation (LDPE2), which contained 5 % erucamide, was used to produce layer 1 with a final concentration of erucamide of 0.35 % by weight (3500 ppm). The top films Sample 1 and 2 were manufactured via round cast coextrusion. The films were finally cross-linked by electron-beam irradiation at 220 Kgy.

For the sake of clarity, in each table herein below reporting a composition, "layer 1" is the outer sealant layer a). Top and bottom films were sealed during the packaging cycles by putting into contact their respective sealant layers.

Table 2

| Thermoplastic Film Composition and Thickness of Samples 1 and 2 | | | |
|---|---|---|---|
| Layer | Thickness | Sample 1 comparative | Sample 2 invention |
| 1 | 8.0 mic. | LDPE1 5% LLDPE1 95% | LDPE2 7% (SL 0.35%) LLDPE1 93% |
| 2 | 27.0 mic. | EVA1 100% | EVA1 100% |
| 3 | 9.0 mic. | LLDPE-md2 100% | LLDPE-md2 100% |
| 4 | 13.0 mic. | EVOH1 100% | EVOH1 100% |
| 5 | 9.0 mic. | LLDPE-md2 100% | LLDPE-md2 100% |
| 6 | 27.0 mic. | EVA1 100% | EVA1 100% |
| 7 | 7.0 mic. | LDPE1 5% HDPE1 95% | LDPE1 5% HDPE1 95% |
| Total | 100.0 mic. | | |
| SL slip agent | | | |

The sealability of a vacuum skin package with an easy open feature using Sample 1 and Sample 2 as a top film sealed onto a bottom film (Bottom1) was assessed. The bottom film is described below in Table 3:

Table 3

| Bottom 1 film Composition and Thickness | | |
|---|---|---|
| Layer | Thickness mic. | Bottom1 |
| 1 | 2.0 | EVA3 100% |
| 2 | 6.0 | PB2 20% EVA2 22% EMAA-Na 58% |
| 3 | 8.0 | EVA-md1 100% |
| 4 | 108.5 | PS 45% SBS 55% |
| 5 | 8.0 | EVA-md1 100% |
| 6 | 6.0 | EVOH3 100% |
| 7 | 8.0 | EVA-md1 100% |
| 8 | 108.5 | PS 45% SBS 55% |
| 9 | 10.0 | EVA-md2 100% |
| 10 | 15.0 | PETG 100% |
| Total | 280.0 | |

The vacuum skin packages were manufactured with a skin-packaging machine (Multivac R570CD) at the following dome temperature: 140ºC, 150ºC, 160ºC, 170ºC, 180ºC and 190ºC. An internal sensor on the skin-packaging machine, that is used to set the heated dome temperature, was used to record the sealing temperature. The equipment had a dome height of 30 mm, and vacuum time was set to 1 sec. The bottom film was thermoformed inline, with bottom dimensions were 250 mm long x 135 mm wide x 5 mm deep. Samples 1 and 2 (top films) were sealed onto Bottom 1, the structure of which is reported in Table 3. Thirty packages were manufacture for each top film and temperature. The packaged product was a wet pad of 75 mm x 150 mm Dry-Loc pad by Cryovac. The packages were manually opened by two panelists and the sealability of the packages was ranked in different areas of the package: on the outer rim of bottom support surface and on main area of bottom support surface not occupied by the wet pad. The ranking was based on the criteria reported in Table 4.

Table 4

| Sealability of top film to bottom film: ranking for Packages | | | | | |
|---|---|---|---|---|---|
| Bottom support Surface | Bad Seal | Acceptable Seal | Good Seal | Many Pleats | Few Pleats |
| Outer rim | a | b | c | - | - |
| Main area | 1 | 2 | 3 | ** | * |

The sealability results of Samples 1 and 2 vacuum-sealed to Bottom 1 at different dome temperatures are shown in Table 5. The panelist were in agreement with the final rankings.

Table 5

| Sealability Results for Samples 1 and 2 with Bottom 1. | | | | | | |
|---|---|---|---|---|---|---|
| | Seal Temperature (°C) | | | | | |
| | 140 | 150 | 160 | 170 | 180 | 190 |
| Sample 1 | 1a* | 2b* | 2b* | 2b | 3c | 3c |
| Sample 2 | 1a* | 2b** | 3c | 3c | 3c | 3c |

Sample 1 (Comparative) did not contain a slip agent in the sealant layer and results showed that a good seal with no pleats was obtained at 180ºC and 190ºC. The sealability at 170ºC was an acceptable seal, but had areas that were not completely sealed. Sample 2 (Invention) did contain a slip agent in the sealant layer and results showed that a good seal with no pleats was obtained at 160ºC, 170ºC, 180ºC, and 190ºC. In conclusion, from the comparison of the results of Sample 1 vs Sample 2 package, it appears that the addition of the slip agent helped to reduce the sealing temperature of the top film to the bottom film by 20ºC.

EXAMPLE 2

Comparative Testing of Samples 1 and 2 as Top films on Trays

The sealability of a vacuum skin package with an easy open feature using Samples 1 and 2 as a top film onto a tray was tested using a skin packaging machine (Mondini TRAVE E340 VG) at the following dome temperature settings: 140ºC, 150ºC, 160ºC and 170ºC. An internal sensor on the skin-packaging machine, generally used to set the heated dome temperature, was also used to record the sealing temperature. The tray was 18 cm x 26 cm (width x length) and 27 mm deep, with a total thickness of about 750 mic. and it was thermoformed offline. The tray (Bottom2) was a polypropylene monolayer of about 700 mic. laminated with a multilayer film easy open liner (Liner1, 43 mic. thick). The liner composition is shown in Table 6. The machine operated at 6.4 cycles/min with a vacuum < 15 mbar. The equipment perforated the support (4 holes, dimension: 3x6 mm$^2$, hole shape oval) to allow a more efficient vacuum phase.
The dome height was 25 mm, the vacuum time was 2.4 seconds. Thirty packages were manufactured for each Sample and for each temperature. The packaged product was a wet pad: 75 mm x 150 mm Dry-Loc pad by Cryovac. The sealability of the package was judged by two panelists and ranked on the basis of the same criteria reported in Table 3. The sealability results are shown in Table 7. The panelist were in agreement with the final rankings.

Table 6

| Composition and Thickness of the Liner used in Bottom2, Liner1 | | |
|---|---|---|
| Layer | Thickness | Liner1 |
| 1 | 2.0 mic. | LDPE3 50% EMAA 49% LLDPE2 1% |
| 2 | 6.0 mic. | PB2 20% EVA2 22% EMAA-Na 58% |

(continued)

| Composition and Thickness of the Liner used in Bottom2, Liner1 | | |
|---|---|---|
| Layer | Thickness | Liner1 |
| 3 | 9.0 mic. | LLDPE-md4 100% |
| 4 | 6.0 mic. | EVOH4 100% |
| 5 | 20.0 mic. | PP-md 100% |
| Total | 43.0 mic. | |

Table 7

| | Seal Temperature (°C) | | | |
|---|---|---|---|---|
| Sealability Results for Sample 1 and Sample 2 sealed onto Bottom2 | | | | |
| | 140 | 150 | 160 | 170 |
| Sample 1 | 1b | 1c | 2c | 3c |
| Sample 2 | 1b | 2c | 3c | 3c |

Sample 1 (Comparative) did not contain a slip agent in the sealant layer and results showed that a good seal with no pleats was obtained only at 170ºC. The sealability at 160ºC was an acceptable seal with a complete seal on the rim of the tray, but had areas that were not completely sealed on the area of the tray inside of the rim. Sample 2 (Invention) did contain a slip agent in the sealant layer and results showed that a good seal with no pleats was obtained at 160ºC and 170ºC. The comparison of Samples 1 and 2 conclude that the addition of the slip agent helped to reduce the sealing temperature of the top film to the tray by 10ºC.

EXAMPLE 3

Comparative Testing of Samples 1 and 2 as Tray Skins

Two compositions of a thermoplastic film were prepared where the compositions were the same, except that Sample 1 had no slip agent and Sample 2 did have a slip agent. The film layers and compositions are described previously in Table 2 for both samples. The sealability of a vacuum skin package with an easy open feature using Sample 1 and Sample 2 as a tray skin sealed onto a tray was tested using a Tray Skin packaging machine (Multivac T200) at the following dome temperature settings: 140ºC, 150ºC, 160ºC, 170ºC, 180ºC, 190ºC and 200 ºC. An internal sensor on the skin-packaging machine that is used to set the heated dome temperature was used to record the sealing temperature. The tray (thermoformed offline) was an easy open skin tray with the following dimensions: 15 cm x 20 cm (width x length) and 30 mm deep, with a total thickness of 750 mic. The tray (Bottom2) was a polypropylene foil laminated with a multilayer film easy open liner (Liner1, 43 mic. thick). Dome height was 5mm, vacuum time was 1 second. Thirty packages were manufactured for each Sample and for each temperature. The packaged product was a wet pad: 75 mm x 150 mm Dry-Loc pad by Cryovac.

The sealability of the package was judged by two panelists and ranked based on the same criteria reported in Table 3. The sealability results are shown in Table 8. The panelist were in agreement with the final rankings.

Table 8

| | Seal Temperature (°C) | | | | | | |
|---|---|---|---|---|---|---|---|
| Sealability Results for Sample 1 and Sample 2 as a Tray Skin | | | | | | | |
| | 140 | 150 | 160 | 170 | 180 | 190 | 200 |
| Sample 1 | - | - | 1a | 1b | 2c | 2c | 3c |
| Sample 2 | - | - | 1a | 2c | 3c | 3c | 3c |

Sample 1 did not contain a slip agent in the sealant layer and results showed that a good seal with no pleats was obtained only at 200ºC. The sealability result at 180ºC and 190 ºC was "acceptable seals" with a complete seal on the rim of the tray, but the packages had areas that were not completely sealed on the area of the tray inside of the rim. Sample 2 did contain a slip agent in the sealant layer and results showed that a good seal with no pleats was obtained at 180ºC, 190ºC, and 200ºC. In conclusion, by comparison of Samples 1 and 2, it appears that the addition of the slip agent helped to reduce the sealing temperature of the thermoplastic film as a tray skin on the tray by 20ºC.

EXAMPLE 4

Comparative Testing of Samples 3 and 4 as Top films on Trays

The sealability of a vacuum skin package with an easy open feature using Sample 3 and Sample 4 as a top film onto a tray was tested using a skin packaging machine (Mondini TRAVE E340 VG) at the following dome temperature settings: 140ºC, 150ºC, 160ºC, 170ºC, 180ºC and 190ºC. An internal sensor on the skin-packaging machine that is used to set the heated dome temperature was used to record the sealing temperature. The film layers and compositions are described in Table 9 below for both samples 3 and 4. The top films Sample 3 and 4 were manufactured via round cast coextrusion. The films were finally cross-linked by electron-beam irradiation at 220 Kgy.

Table 9

| Film Composition and Thickness of Samples 3 and 4 | | | |
|---|---|---|---|
| Layer | Thickness mic. | Sample 3 comparative | Sample 4 invention |
| 1 | 2.0 | VLDPE 100% | VLDPE 93% LDPE2 7% (SL 0.35%) |
| 2 | 6.0 | PB1 30% EVA2 19% EMAA-Na 51% | PB1 30% EVA2 19% EMAA-Na 51% |
| 3 | 31.0 | EMAA-Na 100% | EMAA-Na 100% |
| 4 | 3.0 | LLDPE-md1 100% | LLDPE-md3 100% |
| 5 | 13.0 | EVOH2 100% | EVOH2 100% |
| 6 | 3.0 | LLDPE-md1 100% | LLDPE-md3 100% |
| 7 | 21.0 | EMAA-Na 100% | EMAA-Na 100% |
| 8 | 21.0 | EMAA-Na 100% | EMAA-Na 100% |
| 9 | 10.0 | HDPE2 100% | HDPE2 100% |
| Total | 110.0 | | |
| SL slip agent | | | |

The tray (thermoformed offline) was 18 cm x 26 cm (width x length) and 27 mm deep, with a total thickness of 750 mic. The tray was a polypropylene foil laminated with a multilayer liner (45 mic. thick, 100% PE/EVOH/PE). The machine operated at 6.4 cycles/min with a vacuum < 15 mbar. The equipment perforated the support (4 holes, dimension: 3x6 mm$^2$, hole shape oval) to allow a more efficient vacuum phase.

Dome height was 25 mm, vacuum time was 2.4 seconds. Thirty packages were manufactured for each Sample and each temperature. The packaged product was a wet pad: 75 mm x 150 mm Dry-Loc pad by Cryovac. An internal sensor on the skin-packaging machine that is used to set the heated dome temperature was used to record the sealing temperature.

The sealability of the package was judged by two panelists and ranked on the basis of the same criteria reported in Table 3.

The sealability results are shown in Table 10. The panelist were in agreement with the final rankings.

Table 10

| Sealability Results for Samples 3 and 4 with a Tray | | | | | | |
|---|---|---|---|---|---|---|
| | Dome Temperature (°C) | | | | | |
| | 140 | 150 | 160 | 170 | 180 | 190 |
| Sample 3 | 2c | 3c | 3c | 3c | 3c | 3c |
| Sample 4 | 3c | 3c | 3c | 3c | 3c | 3c |

Sample 3 did not contain a slip agent in the sealant layer and results showed that a good seal with no pleats was obtained at 150ºC, 160ºC, 170ºC, 180ºC, and 190ºC. Sample 4 did contain a slip agent in the sealant layer and results showed that a good seal with no pleats was obtained at 140ºC, 150ºC, 160ºC, 170ºC, 180ºC, and 190ºC. In conclusion, by comparison of Samples 3 and 4 it appears that the addition of the slip agent helped to reduce the sealing temperature of the top film to the tray by 10ºC.

In conclusion, the addition of a slip agent to a film that was used as a top thermoplastic film in three different types of vacuum skin packages (Examples 1-4), resulted in the reduction of the sealing temperature. The slip agent reduced the sealing temperature but did not affect the processing of the film, despite high loading in the sealant layer of the film. All examples also revealed that the bottom support had no distortion throughout all testing. Further samples according to the invention (Samples 6 to 10) and a comparative Sample (Sample 5) were manufactured according to the same process reported above for the manufacture of Samples 3 and 4.

Their compositions and thickness are shown in the following Tables 10a and 10b:

Table 10a

| Layer | Thickness mic. | Sample 5 comparative | Sample 6 invention | Sample 7 invention |
|---|---|---|---|---|
| 1 | 8.0 | LLDPE 100% | LLDPE 97% LDPE2 3% (SL 0.15%) | LLDPE 93% LLDPE3 7% (SL 0.35%) |
| 2 | 27.0 | EVA1 100% | EVA1 100% | EVA1 100% |
| 3 | 9.0 | LLDPE-md2 | LLDPE-md2 | LLDPE-md2 |
| 4 | 13.0 | EVOH1 | EVOH1 | EVOH1 |
| 5 | 9.0 | LLDPE-md2 | LLDPE-md2 | LLDPE-md2 |
| 6 | 27.0 | EVA1 100% | EVA1 100% | EVA1 100% |
| 7 | 7.0 | LDPE1 5% HDPE1 95% | LDPE1 5% HDPE1 95% | LDPE1 5% HDPE1 95% |
| Total | 100.0 | | | |
| SL slip agent | | | | |

Table 10b

| Layer | Thickness mic. | Sample 8 invention | Sample 9 invention | Sample 10 invention |
|---|---|---|---|---|
| 1 | 8.0 | LDPE3 93,00% LDPE2 7% (SL 0.35%) | LDPE3 93% LLDPE3 7% (SL 0.35%) | LLDPE 90% LDPE2 10% (SL 0.50%) |
| 2 | 27.0 | EVA1 100% | EVA1 100% | EVA1 100% |
| 3 | 9.0 | LLDPE-md2 100% | LLDPE-md2 100% | LLDPE-md2 |
| 4 | 13.0 | EVOH1 100% | EVOH1 100% | EVOH1 100% |
| 5 | 9.0 | LLDPE-md2 100% | LLDPE-md2 100% | LLDPE-md2 100% |
| 6 | 27.0 | EVA1 100% | EVA1 100% | EVA1 100% |

(continued)

| Layer | Thickness mic. | Sample 8 invention | Sample 9 invention | Sample 10 invention |
|---|---|---|---|---|
| 7 | 7.0 | LDPE1 5% HDPE1 95% | LDPE1 5% HDPE1 95% | LDPE1 5% HDPE1 95% |
| Total | 100.0 | | | |
| SL slip agent | | | | |

Measurement of seal strength

The seal strength of the films of the invention and of comparative films was measured by sealing together through the sealing surfaces two identical samples of the film under test and by measuring the force needed to separate the sealed samples.

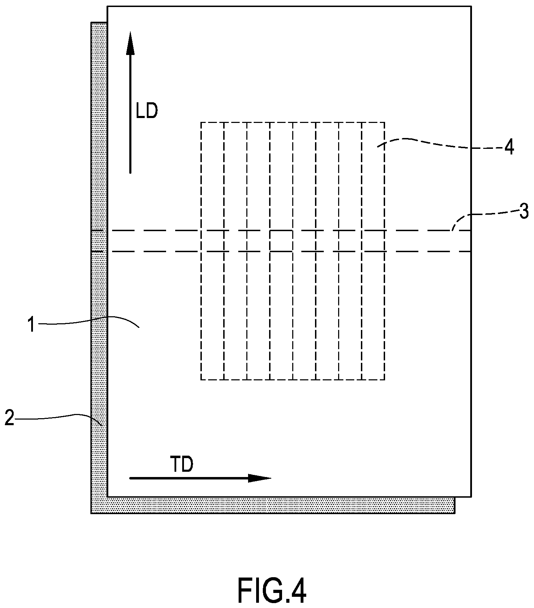

In particular, with reference to Figure 4, two rectangular lengths (1 and 2) of the film under test (LD dimension - length - about 10 cm x TD dimension - width - about 25 cm) were cut, superimposed with their outer sealant layers a) facing each other and aligned along their LD. The coupled samples were sealed transversally at about mid length (sealing bar orthogonal to the LD of the films) for 1 sec, at 20 psi, with a sealing bar (Sencorp systems) heated at the temperatures reported in Table 10c. The sealing surface (3) was a rectangle of about 25 cm of width (the same width of the films 1 and 2) and 2.54 cm of height (LD).

Eight adjacent specimens (4), including both the films sealed together, of 2.54 cm of width and of about 10 cm of length, orthogonal and centered with respect to the sealing surface (3), were cut as depicted in Figure 4.

Other eight specimens were prepared as described above, for a total of 16 specimens for each film under test.

The measurement of the seal strength was effected with a dynamometer Instron 5564, with a crosshead speed of 300 mm/min. Each specimen was clamped within the jaws: one flap of the film (e.g. 1) was clamped in the upper jaw which is movable during the test while the other flap of the film (e.g. 2) in the lower jaw which is fixed, in such a way that the seal is horizontally positioned at equal distance from the two jaws. The jaws separation before starting the test was 2.51 cm. The test was then started, the crosshead moved up until the seal was broken. The instrument recorded the force needed to open the seal (in grams). The average value, among the 16 specimens tested for each film, was calculated and reported in Table 10c.

Table 10c: seal strengths (gf /2.54 cm)

| Film | SL % | Seal T °C | | | | | | | |
|---|---|---|---|---|---|---|---|---|---|
| | | 145 | 150 | 155 | 165 | 170 | 175 | 180 | 185 |
| Sample 5 (comp.) | 0.00 | 550 | 1900 | 2700 | 2700 | 2900 | 2900 | 3000 | 3100 |
| Sample 2 (inv) | 0.35 | 190 | n.a. | 3400 | 3400 | 3600 | 3600 | 3500 | 3500 |
| Sample 6 (inv) | 0.15 | 660 | 2800 | 2900 | 3100 | 3200 | 3400 | 3200 | 3300 |
| Sample 7 (inv) | 0.35 | 490 | n.a. | 3000 | 3300 | 3400 | 3500 | 3400 | 3500 |
| Sample 8 (inv)* | 0.35 | 660 | 2500 | 2700 | 2600 | 2700 | 2700 | 2700 | 2800 |
| Sample 9 (inv)* | 0.35 | 850 | 2400 | 2500 | 2600 | 2800 | 2700 | 2700 | 2900 |
| Sample 10 (inv) | 0.50 | 130 | n.a. | 3400 | 3500 | 3500 | 3700 | 3600 | 3500 |
| SL%: % ww of slip agent in layer a); * LLDPE3 as sealant polymer | | | | | | | | | |

A seal strength of at least about 2200 gf/inch is considered acceptable for the present applications.

Samples 5 (comparative), 2, 6 and 10 were directly comparable as they contain the same sealant polymer in layer a) (LLDPE) and the same polymer in the slip masterbatch (LDPE2), Sample 7 has a different matrix for the Masterbatch (LLDPE3 instead of LDPE2) Samples 8 and 9 contain another sealant polymer (LDPE3) and due to this other sealant, they have a different sealing behavior.

As it appears from the data reported in Table 10c, the samples in which the films include the slip agent in amount higher than 0.10% by weight in the sealant layer a), when compared with the film Sample 5 (no slip agent) showed better seal properties. In fact, the films of the invention were characterized by lower seal initiation temperatures, with comparable or even higher seal strength values.

In particular, it can be seen that:

- at 145°C both the films of the invention and the comparative film show a very low seal strength (very weak seal), with values which seem unrelated with the slip content;
- at 155°C the values of seal strengths correspond to strong seals. By comparing the films comprising the same sealant polymer LLDPE in layer a), namely the comparative film 5 and the films of the invention 2, 6, 7 and 10, it resulted that the slip agent was responsible for a significant proportional increase in the seal strength up to a plateau at 0.35% ww of slip agent;.
- as the sealing temperature increased, the seal strength typically increased as well, being always higher for the samples including the slip agent.

The film of the invention 10, with the highest content of slip agent (0.5%) showed the highest values of seal strength, especially at low temperatures (see 155°C). Regarding the influence of the main component of the sealant layer a) on the seal strength, it appeared that the films of Samples 8 and 9 containing LDPE3 showed lower seal strengths than films of the Samples 2 and 7, including LLDPE. Furthermore, the films according to the invention disclosed strong interlayer bonds: in fact, during this test, it was never observed delamination of the sealant layer a) from the adjacent layer. In conclusions, the films according to the invention provide for good seals starting from temperatures 5 to 10 °C lower than those of the comparative film Sample 5 (see for instance the seal strength at 150°C of 2800 of Sample 6 vs 1900 of Comparative 5, which reached those seal strength only at temperature higher than 165°C).

Measurement of the Gel Content percentage

The gel content expresses the percentage of a polymeric material made insoluble in toluene by cross-linking. It is an index of the level of cross-linking of the polymer in that material.

The gel content can be calculated on the whole film or on a portion of the film.

In particular, when the material is a multilayer film, the test may be carried out on the entire film if all the polymers making the films, before cross-linking, are toluene-soluble- or on some layers thereof, namely on a part of it made of polymers which before cross-linking are toluene-soluble, by delaminating the desired layers and by not submitting to the measurement those layers whose polymers are not soluble in toluene per se, such as for instance EVOH or ionomers.

If the gel content is evaluated on the toluene-soluble part of the film only, as explained above, the result represents a good index of a successful irradiation for the whole film, including for the layers not analyzed. In fact, as the present films are generally prepared by coextrusion of all layers followed by irradiation, then all the layers have been accordingly subjected to the same irradiation.

As used herein, the term "soluble in toluene" or "toluene-soluble" refers to a solubility of at least 1.25 g/l at the boiling temperature of toluene (about 110°C, at standard pressure of 1 atm, measured after boiling the sample in toluene for 30 minutes).

In alternative to delamination, gel content can be measured using the whole film and the results - that might be distorted by the presence of gel material due to polymers insoluble in toluene per se, namely even if not cross-linked - are corrected by subtracting the weight of said insoluble polymers from the gel weight.

Basically, the gel content percentage only due to cross-linking is then calculated with respect to the weight of the polymers which, before cross-linking, were soluble in toluene. The result is expressed as percentage by weight of the undissolved material (i.e. the cross-linked material) after toluene treatment with respect to the total weight of the initially toluene soluble material.

The method requires the following equipment: beakers, analytical balance, hot plate, wire metal gauze 80 mesh, toluene, and a glass stirrer. The entire procedure was done under a hood.

The test was performed according to the following procedure: A square of wire metal gauze (80 mesh, 15 cm x 15 cm) was cut and cleaned by submersion in a beaker containing toluene. After solvent evaporation, the wire gauze was given a funnel shape and weighed (weight B). Then, 120 ml of toluene were put in a 200 ml beaker and heated on a hot plate. A sample of the material of about 150 mg was weighed (weight a) and put in boiling toluene for 30 minutes, while being stirring. Then, the solution was filtered on the wire gauze and the gel remained on the wire gauze. The wire gauze with the gel was evaporated under the hood for 24 hours. The wire gauze was then weighed (weight C) after 24 hours and 48 hours up to a constant weight.

The gel content percentage by weight was calculated with the following formula:

$$(C-B)/A \times 100$$

The calculated value was possibly corrected as explained above if the analysis was effected on the whole film and if polymers insoluble in toluene per se were present. The analysis was repeated twice for each material.

The results of gel content and MFI assessment for Samples 2 and 4, according to the test methods previously defined, are reported in the following Table 11:

Table 11: gel content and MFI

|  | Sample 4 | Sample 2 |
|---|---|---|
|  | Gel content % by weight | |
|  | 95.0* (94.0)** | 93.0* (62.0)** |
|  | MFI* at 230°C (g/10 min) | |
| Load 2.16 Kg | No flow | No flow |
| Load 21.6 Kg | 3.73 | 0.68 |
| Std dev | 0.32 | 0.6 |
| * whole film **corrected value | | |

EXAMPLE 6

Implosion and Formability

Samples 1-4 were used for the formability and implosion tests as top films in a vacuum skin package. The bottom film for Samples 1 and 2 was Bottom1 as shown in Table 3. The bottom film for Samples 3 and 4 was PentaFood KSeal APET 300 mic./APET, 250 mic./PE 50 mic. (Bottom3).

Formability test

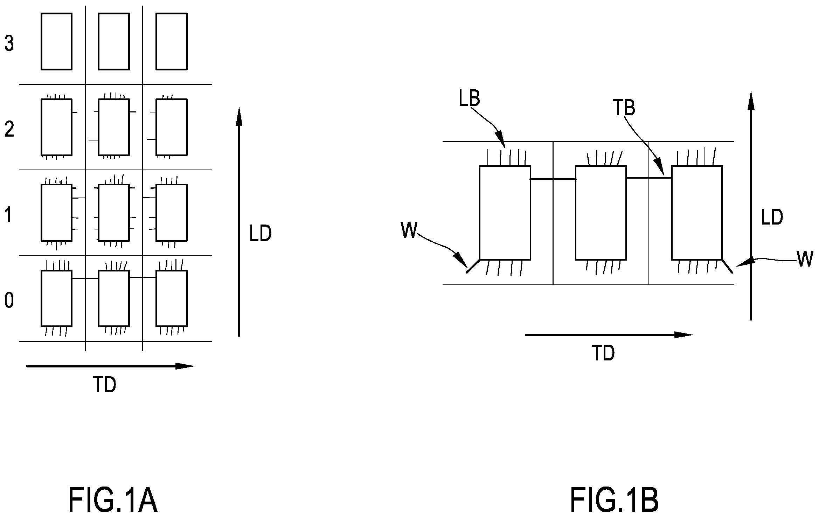

The formability test was used to evaluate the ability of a VSP top film to be formed over an article (e.g. product). The method uses a standard VSP procedure and a score from 0 to 3 was assigned to express the recurrence of sealing defects. The sealing defects tested were bridging and webbing pleats in the VSP packages. Figures 1A and 1B explain in a schematic way the sealing defects under evaluation, their denomination and the score assigned.

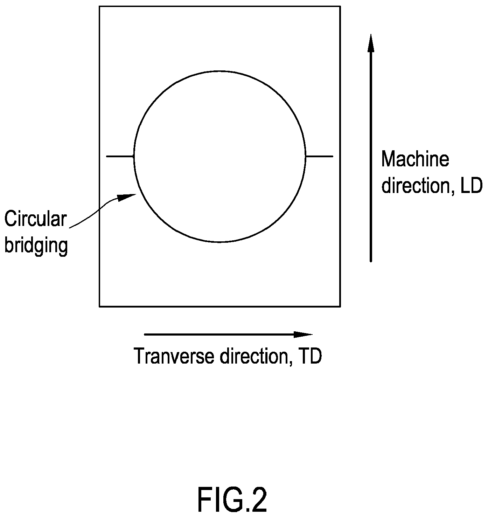

For formability testing, a conventional VSP cycle was performed using Rollstock R570CD by Multivac equipped with a dome (30 mm height and dome temperature of 200°C). The packaged products were parallelepiped (105 mm wide x 190 mm long x 30 mm high) plastic blocks. For each kind of package (each sample tested, e.g. Sample 1 as top film and Bottom1 as bottom film), fifteen packages were manufactured and scored by two panelists for webbing (pleats located in the corner) and for bridging. A rating of 3 was the best score (no webbing and no bridging) and a rating of 0 was the worst score. Figures 1A and 1B illustrate the sealing defects evaluated for the score, in particular W (webbing), LB (longitudinal bridging) and TB (transverse bridging). Figure 2 illustrates the sealing defect for circular bridging (CB). The average result of the evaluation for the films of the present invention and for reference films (Samples 1-4) are reported in Table 12 below. Sample 2 and 4 showed very high score for webbing and bridging, thus demonstrating to be highly formable.

Implosion resistance test

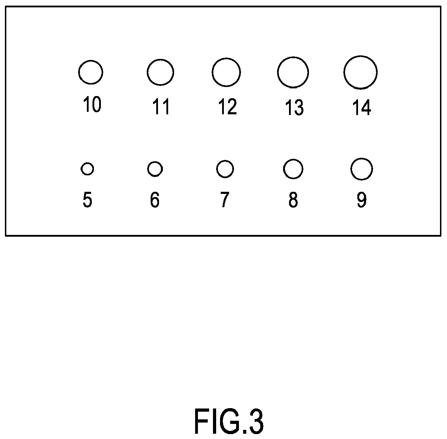

The implosion resistance test was used to measure the ability of a VSP film to fill cavities without breaking. A conventional VSP cycle was performed, as described earlier for the formability test, but the articles packaged were plastic blocks (100 mm wide x 190 mm long x 25 mm high) having, on the top surface, 10 calibrated holes having the same depth (20 mm) but of different diameters. Hole diameter ranges from 5 to 14 mm for films up to 100 mic., as per Figure 3. Moreover, for the implosion test, a reduction of the re-venting nozzle diameter was applied through a screwed insert: the final diameter of the nozzle was 7 mm instead of 25 mm in order to allow for a slower draping of the film onto the support and the testing block.

During the packaging tests with the plastic block, the film tends to undergo a stretching stress in correspondence with the holes, which increases with the area of the hole. The area of the largest hole, before the film broke, was taken as index of implosion resistance, representing the packaging performance of the film. Good top films, of thickness comparable to the films according to the invention, usually have an implosion resistance of 8. Two panelists evaluated films performance in terms of implosion on 30 samples for each type of VSP package (30 packages for each combination of top and bottom) and the average value was calculated and reported in Table 12.

Table 12

| Implosion and Formability Results for Samples 1 to 4 | | | | | |
|---|---|---|---|---|---|
| Bottom film was Bottom1 for Sample 1 and Sample 2 while Bottom3 was used for Samples 3 and 4 | | | | | |
| | Formability | | | | Implosion |
| | Webbing | Bridging | | | |
| Sample | W | TB | LB | CB | |
| 1 | 3.0 | 3.0 | 2.7 | 3.0 | 9.5 |
| 2 | 3.0 | 3.0 | 2.8 | 3.0 | 9.9 |
| 3 | 3.0 | 3.0 | 2.9 | 3.0 | 10.2 |
| 4 | 3.0 | 2.9 | 3.0 | 2.7 | 10.4 |

Sample 2 and 4 showed excellent formability, with scores of at least 2.7, and very good implosion resistance, reaching about 10 and even more of implosion score.

Machinability test

Machinability of the films according to the present invention was evaluated during the packaging testing described hereinabove. "Machinability" is the general ability of the web to run continuously through the skin cycle without any drawback (i.e. curl, roll telescoping, sticking, etc.), without considering other specific performance which are formulation related (i.e. abuse, sealability, implosion, etc.). Machinability test results did not indicate any difference between Samples 1 and 2 or between Sample 3 and 4 on all packaging machines tested. Similarly, no issues were observed with Samples 6 to 10. There were no undesired or unplanned machine stops during the packaging evaluations, no film breakages and no slippery issues.

In conclusion, the film of the present invention resulted not only sealable on supports of various chemical nature at significantly lower sealing temperatures, but also highly formable and very good at implosion. They were easily machinable and mechanically resistant to VSP cycle. Furthermore, the resulting VSP packages were not distorted.

**Claims**

1. A vacuum skin packaging thermoplastic non-oriented film suitable for use as a top film, said film comprising at least

   - an outer sealant layer a), comprising one or more sealable polymer(s) and one or more slip agent(s);
   - a second layer a') adhered thereto, optionally comprising one or more sealable polymer(s) and one or more slip agent(s),

   wherein the total content of slip agent(s), in the outer sealant layer a) or in the outer sealant layer a) and in the second layer a') adhered thereto, is greater than 0.10% by weight with respect to layer a) weight or to layer a) and second layer a') total weight respectively,

   - an outer abuse layer b); and
   - at least one inner bulk layer c) comprising one or more polymers selected from low density polyethylene, ethylene-vinyl acetate copolymers, linear low density polyethylenes, linear very low density polyethylenes and ionomers,

   wherein the total thickness of the bulk layer(s) c) in the overall structure is at least 30%.

2. The thermoplastic film of claim 1 wherein the total content of slip agent(s) in the outer sealant layer a) or in the outer sealant layer a) and in the second layer a') adhered thereto, is greater than 0.15%, 0.20%, 0.25%, 0.30%, 0.33% by weight with respect to layer a) weight or to layer a) and second layer a') total weight respectively.

3. The thermoplastic film of claims 1 or 2 wherein the sealable polymer is a polyolefin selected from ethylene homo- or co-polymers, ethylene/alpha-olefin copolymers, ethylene/acrylic acid copolymers, ethylene/methacrylic acid co-polymers, ethylene/vinyl acetate copolymers, ionomers and their admixtures, preferably is selected from linear low density polyethylene, ionomers and their admixtures.

4. The thermoplastic film of any one of the preceding claims wherein the outer sealant layer a) comprises at least 50%, 60%, 70%, 80%, 90%, 95%, 99% or 99.9% by weight with respect to the layer a) weight of one or more of the above sealable polymers.

5. The thermoplastic film of any one of the preceding claims, wherein the slip agent is selected from amides, carboxylic acids and their admixtures, preferably from the amides of carboxylic acids having at least five carbon atoms such as behenamide, linolenamide, arachidamide, ricinolamide, palmitamide, myristamide, linoleamide, lauramide, capramide, perlargonamide, caprylamide, oleamide, stearamide, N,N'-ethylene bisoleamide, erucamide and their admixtures, more preferably the slip agent is erucamide.

6. The thermoplastic film of any one of the preceding claims wherein only the outer sealant layer a) comprises the slip agent.

7. The thermoplastic film of any one of the preceding claims, wherein the outer sealant layer a) has a thickness in the range of 2 to 20 microns, preferably 2 to 15 microns, more preferably 2 to 12 microns, even more preferably 5 to 10 microns.

8. The thermoplastic film of any one of the preceding claims, wherein the film comprises:
   one or more of at least one inner tie layer d) or at least one inner barrier layer e), and wherein preferably

   - the outer abuse layer b) comprises one or more polymer(s) selected from polyolefins and their copolymers, polyamides, polyesters and styrene-based polymers; and/or
   - the inner tie layer d), if present, comprises one or more polymers selected from ethylene-unsaturated acid copolymers, ethylene-unsaturated ester copolymers, anhydride-modified polyolefins, polyurethane, and mixtures thereof; and/or
   - the inner barrier layer e), if present, comprises one or more polymers selected from PVDC, polyamides, EVOH, polyesters, and blends thereof, preferably EVOH, optionally EVOH blended with polyamides.

9. The thermoplastic film of any one of the preceding claims, wherein the film comprises:

   c) two inner bulk layers,
   d) two inner tie layers, and
   e) an inner barrier layer, preferably the film consists of said layers in a "a/c/d/e/d/c/b" sequence.

10. The thermoplastic film of any one of the preceding claims, wherein said second layer a') is selected among an inner bulk layer c), an inner tie layer d) or an inner barrier layer e).

11. The thermoplastic film of any one of the preceding claims wherein the film is cross-linked.

12. The thermoplastic film of any one of the preceding claims wherein said film is **characterized by**:

    - a gel content calculated with respect to the whole film or to that portion of the film made of polymers which are soluble in toluene when non cross-linked, of not less than 25%, preferably not less than 40%, more preferably not less than 60% by weight, according to the test method reported in the description and/or
    - a melt flow index (MFI) of the whole film, measured at 230°C, 21.6 kg, according to ASTM D-1238, not higher than 4 g/10 min, not higher than 3 g/10 min, preferably not higher than 2 g/10 min, more preferably not higher than 1 g/10 min, even more preferably of 0 g/10 min and /or
    - a melt flow index (MFI) of the whole film, measured at 230°C, 2.16 kg, according to ASTM D-1238, not higher than 2 g/10 min, preferably not higher than 1 g/10 min, even more preferably of 0 g/10 min.

13. The thermoplastic film of any one of the preceding claims wherein the film is **characterized by**

    - an implosion resistance, measured according to the test method reported in the description, of at least 6 mm, preferably at least 8 mm, even more preferably at least 10 mm and/or
- a formability score for both webbing and bridging (longitudinal, transverse and circular) measured according to the test method reported in the description of at least 2, preferably at least 2.5, even more preferably at least 2.8.

14. The thermoplastic film of any one of the preceding claims, wherein the outer sealant layer a) and/or the outer abuse layer b) and/or any inner layer, do not contain thermoplastic starches.

15. A method of making a non-oriented thermoplastic vacuum skin packaging film suitable for use as a top film, according to any one of claims 1 to 14, said method comprising

i) blending one or more sealable polymer(s) with one or more slip agent(s) to form an outer sealant layer a),
ii) optionally, blending one or more sealable polymer(s) with one or more slip agent(s) to form a second layer a') to be adhered to the outer sealant layer a),
wherein the outer sealant layer a) or
the outer sealant layer a) together with the second layer a') adhered thereto, comprise greater than 0.10% by weight of slip agent(s);
iii) coextruding the outer sealant layer a), the second layer a') adhered thereto, the outer abuse layer b), an inner bulk layer c) and, optionally, one or more of an inner tie layer d) and an inner barrier layer e) and
iv) optionally, cross-linking the film,
thus providing the thermoplastic vacuum skin packaging film suitable for use as a top film, optionally wherein the film is not subjected to any orientation step.

16. A vacuum skin package, comprising

a bottom support comprising a first outer sealant layer, optionally wherein said bottom support consists of a bottom multilayer thermoplastic, preferably flexible, film comprising at least a heat-sealable layer and an outer abuse resistant layer,
an article loaded on top of the bottom support, and
a top non-oriented thermoplastic film, according to any of claims 1 to 14, comprising a second outer sealant layer a),
the top film substantially conforming to both an upper surface of the article and a portion of the bottom support not covered by the article,
wherein the top film second outer sealant layer a) is sealed to the first outer sealant layer of the bottom support in the portion not covered by the article.

17. The vacuum skin package of claim 16 wherein the top film or the bottom film of the bottom support include an EZO layer comprising a cohesive failure blend.

18. The vacuum skin package of claims 16 or 17 further comprising a support member comprising a thermoplastic material, preferably selected from polypropylenes, polyesters, PVC or HDPE, and/or a non-thermoplastic material, preferably selected from cardboard or aluminum.

19. The vacuum skin package of any one of claims 16 to 18, wherein the bottom support is a tray having a total thickness lower than 1000 microns, than 800 microns, than 600 microns, than 500 microns, than 400 microns, than 300 microns.

20. The vacuum skin package of any one of claims 16 to 19 wherein the article is a food product.

21. A method of manufacturing a vacuum skin package comprising the steps of:

a. providing a bottom support including a first outer sealant layer;
b. placing an article on top of the bottom support;
c. providing a top non-oriented thermoplastic film, according to any of claims 1 to 14, including a second outer sealant layer a) over the bottom support having the article thereon, wherein the second outer sealant layer a) of the top film faces the bottom support;
d. heating the top thermoplastic film to a softening point to produce a softened, conformable top thermoplastic film, optionally at a dome temperature lower than 220°C, preferably lower than 210°C, than 200°C, than 190°C, than 180°C, than 170°C, than 160°C, even lower than 150°C, or of 140°C or even lower;
e. evacuating the atmosphere from a region between the bottom support and the top thermoplastic film;

f. draping the softened, conformable top thermoplastic film over both an upper surface of the article and a portion of an upper surface of the bottom support not covered by the article; and

g. sealing the first outer sealant layer to the second outer sealant layer a) in a region in which the first outer and second outer sealant layers come into direct contact with one another, by differential air pressure.

22. The method of claim 21 wherein the bottom support is a tray having a total thickness lower than 1000 microns, than 800 microns, than 600 microns, than 500 microns, than 400 microns, than 300 microns, and preferably wherein the bottom support does not undergo substantial distortion as a result of the sealing of the first outer sealant layer to the second outer sealant layer a).

23. The use of a vacuum skin packaging non-oriented thermoplastic film according to any one of claims 1 to 14 as a top thermoplastic film for vacuum skin packaging applications.

**Patentansprüche**

1. Thermoplastische, nicht orientierte Folie für Vakuum-Skin-Verpackungen, die zur Verwendung als obere Folie geeignet ist, wobei die Folie mindestens umfasst

   - eine äußere Versiegelungsschicht a), umfassend ein oder mehrere versiegelungsfähige(s) Polymer(e) und ein oder mehrere Gleitmittel;
   - eine darauf aufgebrachte zweite Schicht a'), die optional ein oder mehrere versiegelungsfähige(s) Polymer(e) und ein oder mehrere Gleitmittel umfasst,

   wobei der Gesamtgehalt an Gleitmittel(n) in der äußeren Versiegelungsschicht a) oder in der äußeren Versiegelungsschicht a) und in der darauf aufgebrachten zweiten Schicht a') größer als 0,10 Gew.-% ist, bezogen auf das Gewicht der Schicht a) bzw. auf das Gesamtgewicht der Schicht a) und der zweiten Schicht a')

   - eine äußere Schutzschicht b); und
   - mindestens eine innere Bulkschicht c), umfassend ein oder mehrere Polymere, ausgewählt aus Polyethylen geringer Dichte, Ethylenvinylacetat-Copolymeren, linearen Polyethylenen geringer Dichte, linearen Polyethylenen sehr geringer Dichte und Ionomeren, wobei die Gesamtdicke der Bulkschicht(en) c) in der Gesamtstruktur mindestens 30 % beträgt.

2. Thermoplastische Folie nach Anspruch 1, wobei der Gesamtgehalt an Gleitmittel(n) in der äußeren Versiegelungsschicht a) oder in der äußeren Versiegelungsschicht a) und in der darauf aufgebrachten zweiten Schicht a') größer als 0,15 Gew.-%, 0,20 Gew.-%, 0,25 Gew.%, 0,30 Gew.-%, 0,33 Gew.-% ist, bezogen auf das Gewicht der Schicht a) bzw. auf das Gesamtgewicht der Schicht a) und der zweiten Schicht a').

3. Thermoplastische Folie nach Anspruch 1 oder 2, wobei das versiegelungsfähige Polymer ein Polyolefin ist, ausgewählt aus Ethylenhomo- oder -copolymeren, Ethylen/alpha-Olefin-Copolymeren, Ethylen/Acrylsäure-Copolymeren, Ethylen/Methacrylsäure-Copolymeren, Ethylen/Vinylacetat-Copolymeren, Ionomeren und deren Mischungen, vorzugsweise ausgewählt aus linearem Polyethylen niedriger Dichte, Ionomeren und deren Mischungen.

4. Thermoplastische Folie nach einem der vorhergehenden Ansprüche, wobei die äußere Versiegelungsschicht a) mindestens 50 Gew.-%, 60 Gew.-%, 70 Gew.-%, 80 Gew.-%, 90 Gew.-%, 95 Gew.-%, 99 Gew.-% oder 99,9 Gew.-% umfasst, bezogen auf das Gewicht der Schicht a) des einen oder der mehreren der oben genannten versiegelungsfähigen Polymere.

5. Thermoplastische Folie nach einem der vorhergehenden Ansprüche, wobei das Gleitmittel ausgewählt ist aus Amiden, Carbonsäuren und deren Mischungen, vorzugsweise aus den Amiden von Carbonsäuren mit mindestens fünf Kohlenstoffatomen, wie Behenamid, Linolenamid, Arachidamid, Ricinolamid, Palmitamid, Myristamid, Linolamid, Lauramid, Capramid, Perlargonamid, Caprylamid, Oleamid, Stearamid, N,N'-Ethylenbisoleamid, Erucamid und deren Mischungen, stärker bevorzugt ist das Gleitmittel Erucamid.

6. Thermoplastische Folie nach einem der vorhergehenden Ansprüche, wobei nur die äußere Versiegelungsschicht a) das Gleitmittel umfasst.

**7.** Thermoplastische Folie nach einem der vorhergehenden Ansprüche, wobei die äußere Versiegelungsschicht a) eine Dicke im Bereich von 2 bis 20 Mikrometer, vorzugsweise 2 bis 15 Mikrometer, stärker bevorzugt 2 bis 12 Mikrometer, noch stärker bevorzugt 5 bis 10 Mikrometer aufweist.

**8.** Thermoplastische Folie nach einem der vorhergehenden Ansprüche, wobei die Folie umfasst:
eine oder mehrere von mindestens einer inneren Verbindungsschicht d) oder mindestens einer inneren Barriereschicht e), und wobei vorzugsweise

- die äußere Schutzschicht b) ein oder mehrere Polymer(e), ausgewählt aus Polyolefinen und ihren Copolymeren, Polyamiden, Polyestern und Polymeren auf Styrolbasis umfasst; und/oder
- die innere Verbindungsschicht d), falls vorhanden, ein oder mehrere Polymere, ausgewählt aus Ethylen-ungesättigten Säure-Copolymeren, Ethylen-ungesättigten Ester-Copolymeren, Anhydrid-modifizierten Polyolefinen, Polyurethan und Mischungen davon umfasst; und/oder
- die innere Barriereschicht e), falls vorhanden, ein oder mehrere Polymere, ausgewählt aus PVDC, Polyamiden, EVOH, Polyestern und Mischungen davon, vorzugsweise EVOH, optional EVOH gemischt mit Polyamiden, umfasst.

**9.** Thermoplastische Folie nach einem der vorhergehenden Ansprüche, wobei die Folie Folgendes umfasst:

c) zwei innere Bulkschichten,
d) zwei innere Verbindungsschichten und
e) eine innere Barriereschicht, vorzugsweise besteht die Folie aus diesen Schichten in einer "a/c/d/e/d/c/b"-Reihenfolge.

**10.** Thermoplastische Folie nach einem der vorhergehenden Ansprüche, wobei die zweite Schicht a') aus der inneren Bulkschicht c), einer inneren Verbindungsschicht d) oder einer inneren Barriereschicht e) ausgewählt ist.

**11.** Thermoplastische Folie nach einem der vorhergehenden Ansprüche, wobei die Folie vernetzt ist.

**12.** Thermoplastische Folie nach einem der vorhergehenden Ansprüche, wobei die Folie **gekennzeichnet ist durch**:

- einen Gelgehalt, berechnet in Bezug auf die gesamte Folie oder auf den Teil der Folie, der aus Polymeren hergestellt ist, die unvernetzt in Toluol löslich sind, von nicht weniger als 25 Gew.-%, vorzugsweise nicht weniger als 40 Gew.-%, stärker bevorzugt nicht weniger als 60 Gew.-% gemäß dem in der Beschreibung angegebenen Testverfahren und/oder
- einen Schmelzflussindex (MFI) der gesamten Folie, gemessen bei 230 °C, 21,6 kg, gemäß ASTM D-1238, nicht höher als 4 g/10 min, nicht höher als 3 g/10 min, vorzugsweise nicht höher als 2 g/10 min, stärker bevorzugt nicht höher als 1 g/10 min, noch stärker bevorzugt von 0 g/10 min und/oder
- einen Schmelzflussindex (MFI) der gesamten Folie, gemessen bei 230 °C, 2,16 kg, gemäß ASTM D-1238, nicht höher als 2 g/10 min, vorzugsweise nicht höher als 1 g/10 min, noch stärker bevorzugt von 0 g/10min.

**13.** Thermoplastische Folie nach einem der vorhergehenden Ansprüche, wobei die Folie **gekennzeichnet ist durch**

- eine Implosionsfestigkeit, gemessen nach dem in der Beschreibung angegebenen Testverfahren, von mindestens 6 mm, bevorzugt mindestens 8 mm, noch stärker bevorzugt mindestens 10 mm und/oder
- eine Formbarkeitskennzahl sowohl für Weben als auch Überbrücken (längs, quer und kreisförmig), gemessen gemäß dem in der Beschreibung angegebenen Testverfahren, von mindestens 2, vorzugsweise mindestens 2,5, noch stärker bevorzugt mindestens 2,8.

**14.** Thermoplastische Folie nach einem der vorhergehenden Ansprüche, wobei die äußere Versiegelungsschicht a) und/oder die äußere Schutzschicht b) und/oder eine beliebige innere Schicht keine thermoplastischen Stärken enthalten.

**15.** Verfahren zur Herstellung einer nicht orientierten thermoplastischen Folie für Vakuum-Skin-Verpackungen, die zur Verwendung als obere Folie geeignet ist, nach einem der Ansprüche 1 bis 14, wobei das Verfahren umfasst

i) Mischen von einem oder mehreren versiegelungsfähigen Polymer(en) mit einem oder mehreren Gleitmittel(n) zur Bildung einer äußeren Versiegelungsschicht a),

ii) gegebenenfalls Mischen eines oder mehrerer versiegelungsfähiger Polymere mit einem oder mehreren Gleitmittel(n), um eine zweite Schicht a') zu bilden, die auf der äußeren Versiegelungsschicht a) aufgebracht werden soll,

wobei die äußere Versiegelungsschicht a) oder

die äußere Versiegelungsschicht a) zusammen mit der darauf aufgebrachten zweiten Schicht a') mehr als 0,10 Gew.-% Gleitmittel umfassen;

iii) Coextrudieren der äußeren Versiegelungsschicht a), der darauf aufgebrachten zweiten Schicht a'), der äußeren Schutzschicht b), einer inneren Bulkschicht c), und gegebenenfalls einer oder mehrere einer inneren Verbindungsschicht d) und einer inneren Barriereschicht e) und

iv) gegebenenfalls Vernetzen der Folie,

wodurch die thermoplastische Folie für Vakuum-Skin-Verpackungen bereitgestellt wird, die zur Verwendung als obere Folie geeignet ist, gegebenenfalls wobei die Folie keinem Orientierungsschritt unterzogen wird.

16. Vakuum-Skin-Verpackung, umfassend

eine untere Stütze, die eine erste äußere Versiegelungsschicht umfasst, gegebenenfalls wobei die untere Stütze aus einer unteren, mehrschichtigen, thermoplastischen, bevorzugt flexiblen, Folie besteht, umfassend mindestens eine wärmeversiegelbare Schicht und eine äußere Schutzwiderstandsschicht,

ein Artikel, der oben an der unteren Stütze angebracht ist, und

eine obere, nicht orientierte, thermoplastische Folie nach einem der Ansprüche 1 bis 14, umfassend eine zweite äußere Versiegelungsschicht a),

wobei sich die obere Folie im Wesentlichen sowohl an eine obere Oberfläche des Artikels als auch an einen Abschnitt der unteren Stütze anpasst, der nicht von dem Artikel bedeckt ist, wobei die zweite äußere Versiegelungsschicht a) der oberen Folie mit der ersten äußeren Versiegelungsschicht der unteren Stütze in dem Abschnitt versiegelt ist, der nicht von dem Artikel bedeckt ist.

17. Vakuum-Skin-Verpackung nach Anspruch 16, wobei die obere Folie oder die untere Folie der unteren Stützte eine EZO-Schicht einschließt, die eine Kohäsionsbruchmischung umfasst.

18. Vakuum-Skin-Verpackung nach Anspruch 16 oder 17, ferner umfassend ein Trägerelement, umfassend ein thermoplastisches Material, vorzugsweise ausgewählt aus Polypropylenen, Polyestern, PVC oder HDPE, und/oder ein nicht-thermoplastisches Material, vorzugsweise ausgewählt aus Pappe oder Aluminium.

19. Vakuum-Skin-Verpackung nach einem der Ansprüche 16 bis 18, wobei die untere Stütze eine Schale mit einer Gesamtdicke von weniger als 1000 Mikrometer, als 800 Mikrometer, als 600 Mikrometer, als 500 Mikrometer, als 400 Mikrometer, als 300 Mikrometer ist.

20. Vakuum-Skin-Verpackung nach einem der Ansprüche 16 bis 19, wobei der Artikel ein Lebensmittelprodukt ist.

21. Verfahren zur Herstellung einer Vakuum-Skin-Verpackung, umfassend die Schritte:

a. Bereitstellen einer unteren Stütze mit einer ersten äußeren Versiegelungsschicht;
b. Platzieren eines Artikels oben auf der unteren Stütze;
c. Bereitstellen einer oberen nicht orientierten thermoplastischen Folie nach einem der Ansprüche 1 bis 14, die eine zweite äußere Versiegelungsschicht a) über der unteren Stütze mit dem Artikel darauf einschließt, wobei die zweite äußere Versiegelungsschicht a) der oberen Folie der unteren Stütze zugewandt ist;
d. Erhitzen der oberen thermoplastischen Folie auf einen Erweichungspunkt, um eine erweichte, anpassbare obere thermoplastische Folie herzustellen, gegebenenfalls bei einer Kuppeltemperatur von weniger als 220 °C, vorzugsweise weniger als 210 °C, als 200 °C, als 190 °C, als 180 °C, als 170 °C, als 160 °C, oder sogar niedriger als 150 °C oder 140°C oder sogar niedriger;
e. Evakuieren der Atmosphäre aus einem Bereich zwischen der unteren Stütze und der oberen thermoplastischen Folie;
f. Drapieren der erweichten, anpassbaren oberen thermoplastischen Folie über sowohl einer oberen Oberfläche des Artikels als auch einen Abschnitt einer oberen Oberfläche der unteren Stütze, der nicht von dem Artikel bedeckt ist; und
g. Versiegeln der ersten äußeren Versiegelungsschicht mit der zweiten äußeren Versiegelungsschicht a) in einem Bereich, in dem die erste äußere und die zweite äußere Versiegelungsschicht durch Differenzluftdruck in direkten Kontakt miteinander kommen.

**22.** Verfahren nach Anspruch 21, wobei die untere Stütze eine Schale mit einer Gesamtdicke von weniger als 1000 Mikrometer, als 800 Mikrometer, als 600 Mikrometer, als 500 Mikrometer, als 400 Mikrometer, als 300 Mikrometer ist, und wobei die untere Stütze vorzugsweise als Folge des Versiegelns der ersten äußeren Versiegelungsschicht mit der zweiten äußeren Versiegelungsschicht a) keiner wesentlichen Verformung unterliegt.

**23.** Verwendung einer nicht orientierten thermoplastischen Folie für Vakuum-Skin-Verpackungen nach einem der Ansprüche 1 bis 14 als obere thermoplastische Folie für Vakuum-Skin-Verpackungs-Anwendungen.

**Revendications**

**1.** Film non orienté thermoplastique de pelliplacage sous vide convenant à l'utilisation comme film supérieur, ledit film comprenant au moins

- une couche d'étanchéité externe a), comprenant un ou plusieurs polymère(s) pouvant être scellé(s) et un ou plusieurs agent(s) glissant(s) ;
- une seconde couche a') adhérée dessus, comprenant éventuellement un ou plusieurs polymère(s) pouvant être scellé(s) et un ou plusieurs agent(s) glissant(s),

dans laquelle la teneur totale en agent(s) glissant(s), dans la couche d'étanchéité externe a) ou dans la couche d'étanchéité externe a) et dans la seconde couche a') adhérée dessus, est supérieure à 0,10 % en poids par rapport au poids de la couche a) ou au poids total respectivement de la couche a) et de la seconde couche a'),

- une couche externe inviolable b); et
- au moins une couche de masse interne c) comprenant un ou plusieurs polymères sélectionnés parmi le polyéthylène basse densité, les copolymères d'éthylène-acétate de vinyle, les polyéthylènes basse densité linéaires, les polyéthylènes très basse densité linéaires et les ionomères,

l'épaisseur totale de la(des) couche(s) de mass c) dans la structure globale étant d'au moins 30 %.

**2.** Film thermoplastique selon la revendication 1, la teneur totale en agent(s) glissant(s) dans la couche d'étanchéité externe a) ou dans la couche d'étanchéité externe a) et dans la seconde couche a') adhérée dessus, étant supérieure à 0,15 %, 0,20 %, 0,25 %, 0,30 %, 0,33 % en poids par rapport au poids de la couche a) ou au poids total respectivement de la couche a) et de la seconde couche a').

**3.** Film thermoplastique selon les revendications 1 ou 2, le polymère pouvant être scellé étant une polyoléfine sélectionnée parmi les homo- ou les co-polymères d'éthylène, les copolymères d'éthylène/alpha-oléfine, les copolymères d'éthylène/acide acrylique, les copolymères d'éthylène/acide méthacrylique, les copolymères d'éthylène/acétate de vinyle, les ionomères et leurs mélanges par admixtion, préférablement étant sélectionné parmi le polyéthylène basse densité linéaire, les ionomères et leurs mélanges par admixtion.

**4.** Film thermoplastique selon l'une quelconque des revendications précédentes, la couche d'étanchéité externe a) comprenant au moins 50 %, 60 %, 70 %, 80 %, 90 %, 95 %, 99 % ou 99,9 % en poids par rapport au poids de la couche a) d'un ou plusieurs polymères ci-dessus pouvant être scellés.

**5.** Film thermoplastique selon l'une quelconque des revendications précédentes, l'agent glissant étant sélectionné parmi les amides, les acides carboxyliques et leurs mélanges par admixtion, préférablement parmi les amides d'acides carboxyliques ayant au moins cinq atomes de carbone tels que le béhénamide, le linolénamide, l'arachidamide, le ricinolamide, le palmitamide, le myristamide, le linoléamide, le lauramide, le capramide, le perlargonamide, le caprylamide, l'oléamide, le stéaramide, le *N,N*'-éthylène bisoléamide, l'érucamide et leurs mélanges par admixtion, plus préférablement l'agent glissant étant l'érucamide.

**6.** Film thermoplastique selon l'une quelconque des revendications précédentes, uniquement la couche d'étanchéité externe a) comprenant l'agent glissant.

**7.** Film thermoplastique selon l'une quelconque des revendications précédentes, la couche d'étanchéité externe a) ayant une épaisseur située dans la plage de 2 à 20 microns, préférablement de 2 à 15 microns, plus préférablement de 2 à 12 microns, même plus préférablement de 5 à 10 microns.

**8.** Film thermoplastique selon l'une quelconque des revendications précédentes, dans lequel le film comprend: une ou plusieurs d'au moins une couche de liaison interne d) ou d'au moins une couche formant barrière interne e), et dans lequel, de préférence

- la couche externe inviolable b) comprend un ou plusieurs polymère(s) sélectionné(s) parmi les polyoléfines et leurs copolymères, polyamides, polyesters et polymères à base de styrène ; et/ou
- la couche de liaison interne d), si elle est présente, comprend un ou plusieurs polymères sélectionnés parmi les copolymères d'éthylène-acide insaturé, les copolymères d'éthylène-ester insaturé, les polyoléfines modifiées à l'anhydride, le polyuréthane, et leurs mélanges ; et/ou
- la couche formant barrière interne e), si elle est présente, comprend un ou plusieurs polymères sélectionnés parmi le PVDC, les polyamides, l'EVOH, les polyesters, et leurs mélanges, préférablement l'EVOH, éventuellement l'EVOH mélangé avec des polyamides.

**9.** Film thermoplastique selon l'une quelconque des revendications précédentes, le film comprenant:

c) deux couches de masse internes,
d) deux couches de liaison internes, et
e) une couche formant barrière interne, préférablement le film étant constitué desdites couches en une séquence « a/c/d/e/d/c/b ».

**10.** Film thermoplastique selon l'une quelconque des revendications précédentes, ladite seconde couche a') étant sélectionnée parmi une couche de mass interne c), une couche de liaison interne d) ou une couche formant barrière interne e).

**11.** Film thermoplastique selon l'une quelconque des revendications précédentes, le film étant réticulé.

**12.** Film thermoplastique selon l'une quelconque des revendications précédentes, ledit film étant **caractérisé par** :

- une teneur en gel calculée par rapport au film complet ou à cette portion du film constituée de polymères qui sont solubles dans le toluène lorsqu'ils ne sont pas réticulés, de pas moins de 25 %, préférablement non inférieure à 40 %, plus préférablement non inférieure à 60 % en poids, selon le procédé de test rapporté dans la description et/ou
- le melt flow index (MFI) du film complet, mesuré à 230°C, 21,6 kg, selon la norme ASTM D-1238, non supérieur à 4 g/10 min, non supérieur à 3 g/10 min, préférablement non supérieur à 2 g/10 min, plus préférablement non supérieur à 1 g/10 min, même plus préférablement de 0 g/10 min et/ou
- le melt flow index (MFI) du film complet, mesuré à 230°C, 2,16 kg, selon la norme ASTM D-1238, non supérieur à 2 g/10 min, préférablement non supérieur à 1 g/10 min, même plus préférablement de 0 g/10 min.

**13.** Film thermoplastique selon l'une quelconque des revendications précédentes, le film étant **caractérisé par**

- une résistance à l'implosion, mesurée selon le procédé de test rapporté dans la description, d'au moins 6 mm, préférablement d'au moins 8 mm, même plus préférablement d'au moins 10 mm et/ou
- une note d'aptitude à la mise en forme pour à la fois la mise en voile et le pontage (longitudinale, transversale et circulaire) mesurée selon le procédé de test rapporté dans la description d'au moins 2, préférablement d'au moins 2,5, même plus préférablement d'au moins 2,8.

**14.** Film thermoplastique selon l'une quelconque des revendications précédentes, la couche d'étanchéité externe a) et/ou la couche externe inviolable b) et/ou et/ou toute couche interne, ne contenant pas d'amidons thermoplastiques.

**15.** Procédé de fabrication d'un film de pelliplacage sous vide thermoplastique non orienté convenant à l'utilisation comme film supérieur, selon l'une quelconque des revendications 1 à 14, ledit procédé comprenant

i) mélange d'un ou plusieurs polymère(s) pouvant être scellé(s) avec un ou plusieurs agent(s) glissant(s) pour former une couche d'étanchéité externe a),
ii) éventuellement, mélange un ou plusieurs polymère(s) pouvant être scellé(s) avec un ou plusieurs agent(s) glissant(s) pour former une seconde couche a') à faire adhérer à la couche d'étanchéité externe a),
la couche d'étanchéité externe a) ou la couche d'étanchéité externe a) conjointement à la seconde couche a') adhérée dessus, comprenant plus de 0,10 % en poids de(des) agent(s) glissant(s);

iii) la coextruder la couche d'étanchéité externe a), la seconde couche a') adhérée dessus, la couche externe inviolable b), une couche de mass interne c) et, éventuellement, une ou plusieurs d'une couche de liaison interne d) et d'une couche formant barrière interne e) et

iv) éventuellement, réticuler le film, fournissant ainsi le film convenant à l'utilisation comme film supérieur, éventuellement le film n'étant pas soumis à une quelconque étape d'orientation.

16. Pelliplacage sous vide, comprenant

un support inférieur comprenant une première couche d'étanchéité externe, éventuellement ledit support inférieur étant constitué d'un film thermoplastique multicouche inférieur, préférablement souple comprenant au moins une couche thermoscellable et une couche externe résistante aux abus,
un article chargé sur le dessus du support inférieur, et
un film supérieur non orienté thermoplastique, selon l'une quelconque des revendications 1 à 14, comprenant une seconde couche d'étanchéité externe a),
le film supérieur se conformant sensiblement à la fois à une surface supérieure de l'article et à une portion du support inférieur non recouverte par l'article,
la seconde couche d'étanchéité externe a) du film supérieur étant scellée à la première couche d'étanchéité externe du support inférieur dans la portion non recouverte par l'article.

17. Pelliplacage sous vide selon la revendication 16, le film supérieur ou le film inférieur du support inférieur comprenant une couche d'EZO comprenant un mélange à rupture de cohésion.

18. Pelliplacage sous vide selon les revendications 16 ou 17, comprenant en outre un élément de support comprenant un matériau thermoplastique, préférablement sélectionné parmi les polypropylènes, les polyesters, le PVC ou le HDPE, et/ou un matériau non thermoplastique, préférablement sélectionné parmi le carton ou l'aluminium.

19. Pelliplacage sous vide selon l'une quelconque des revendications 16 à 18, le support inférieur étant un plateau ayant une épaisseur totale inférieure à 1 000 microns, à 800 microns, à 600 microns, à 500 microns, à 400 microns, à 300 microns.

20. Pelliplacage sous vide selon l'une quelconque des revendications 16 à 19, l'article étant un produit alimentaire.

21. Procédé de fabrication d'un pelliplacage sous vide comprenant les étapes de:

a. fournir un support inférieur comprenant une première couche d'étanchéité externe;
b. placer un article sur le dessus du support inférieur;
c. fournir un film supérieur non orienté thermoplastique, selon l'une quelconque des revendications 1 à 14, comprenant une seconde couche d'étanchéité externe a) sur le support inférieur ayant l'article dessus, la seconde couche d'étanchéité externe a) du film supérieur faisant face au support inférieur;
d. chauffer le film supérieur thermoplastique jusqu'à un point de ramollissement pour produire un film supérieur thermoplastique conformable, ramolli, éventuellement à une température dôme inférieure à 220°C, préférablement inférieure à 210°C, à 200°C, à 190°C, à 180°C, à 170°C, à 160°C, même inférieure à 150°C, ou de 140°C ou même inférieure ;
e. évacuer l'atmosphère d'une région située entre le support inférieur et le film thermoplastique supérieur;
f. draper le film supérieur thermoplastique conformable, ramolli sur à la fois une surface supérieure de l'article et une portion d'une surface supérieure du support inférieur non recouverte par l'article; et
g. sceller la première couche d'étanchéité externe à la seconde couche d'étanchéité externe a) dans une région dans laquelle la première et la seconde couche d'étanchéité externes entrent en contact direct l'une avec l'autre, par pression d'air différentielle.

22. Procédé selon la revendication 21, le support inférieur étant un plateau ayant une épaisseur totale inférieure à 1 000 microns, à 800 microns, à 600 microns, à 500 microns, à 400 microns, à 300 microns, et préférablement le support inférieur ne subissant pas de distorsion substantielle du fait du scellement de la première couche d'étanchéité externe à la seconde couche d'étanchéité externe a).

23. Utilisation d'un film non orienté thermoplastique de pelliplacage sous vide selon l'une quelconque des revendications 1 à 14 comme film supérieur thermoplastique pour les applications de pelliplacage sous vide.

FIG.1B

FIG.1A

Circular bridging

Machine direction, LD

Tranverse direction, TD

FIG.2

FIG.3

FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006210742 A1, Cryovac
- WO 0243957 A2, Cryovac
- US 5280055 A
- US 5314934 A
- US 5362777 A
- US 5844023 A
- US 6214907 B
- US 6242102 B
- US 6096809 A
- US 6218321 B
- US 6235815 B
- US 6235816 B
- US 6231970 B
- US 4287151 A
- EP 192131 B1
- WO 9954398 A1
- WO 2014060507 A1
- WO 2011012652 A
- WO 2014060507 A
- EP 16158986 A